# EUROPEAN PATENT SPECIFICATION

(11) **EP 3 391 659 B1**
(45) Date of publication and mention of the grant of the patent: **17.05.2023**
(21) Application number: 17786086.3
(22) Date of filing: 23.03.2017
(51) Int. Cl.: G08C 17/02, H04Q 9/00, G06F 3/048

(54) **ELECTRONIC DEVICE AND METHOD FOR CONTROLLING EXTERNAL DEVICE THEREOF**
ELEKTRONISCHE VORRICHTUNG UND VERFAHREN ZUR STEUERUNG EINER EXTERNEN VORRICHTUNG DAVON
DISPOSITIF ÉLECTRONIQUE ET PROCÉDÉ DE COMMANDE D'UN DISPOSITIF EXTERNE CORRESPONDANT

(30) Priority: 22.04.2016 KR 20160049086; 22.08.2016 KR 20160106116
(43) Date of publication of application: 24.10.2018
(73) Proprietor: Samsung Electronics Co., Ltd., Suwon-si, Gyeonggi-do 16677 (KR)
(72) Inventor: CHOI, Ji-woong, Suwon-si Gyeonggi-do 16508 (KR); BAEK, Seo-hyeon, Seoul 06272 (KR); OH, Hyun-ah, Yongin-si Gyeonggi-do 16988 (KR); JANG, Yong-seok, Suwon-si Gyeonggi-do 16676 (KR)
(74) Representative: Gulde & Partner
(86) International application number: PCT/KR2017/003103
(87) International publication number: WO 2017/183817

(56) References cited:
- WO-A1-2008/090401
- WO-A1-2008/091433
- US-A1- 2005 094 610
- US-A1- 2013 249 811
- US-A1- 2014 108 943
- US-A1- 2014 331 144
- US-A1- 2014 331 144
- US-A1- 2015 058 445
- US-A1- 2016 065 653
- US-A1- 2016 112 268

## Description

### [Technical Field]

Apparatuses and methods consistent with exemplary embodiments relate to an electronic device and a method for controlling an external device thereof, and more particularly, to an electronic device that intuitively provides various services for controlling an external device, and a method for controlling an external device thereof.

### [Background Art]

Due to recent developments in semiconductor technology and wireless communication technology, a network may be formed by various things including a communication function, making it possible to conveniently control the things. As such, the connecting of the things, including the communication functions, to each other via the network is referred to as an Internet of things (IoT).

The types of loT devices that may be connected together have increased. However, in order to connect or operate many types of loT devices and communication functions, there is a cumbersome process in which the loT devices and communication functions are connected to each other one by one. In addition, in a case in which a plurality of loT devices exists around a user, it may be difficult for the user to clearly classify a desired device in a search process. The US 2005/0094610 A1 discloses a controlling device location determination system with a controlling device, one or more signal devices, and multiple control environments, each control environment including home appliances operable by the controlling device wherein signals are send for location determination. The WO 2008/091433 A1 and the WO 2008/090401 A1 disclose systems for wirelessly controlling a plurality of electronic appliances arranged within a local area include an electronic device having a location detection circuit, a user interface circuit and a display device. The US 2014/0331144A1 discloses a method and system for providing a network-based user interface, wherein one from among devices is selected and Ul regarding the device acquired to interact with the device. Further, the US 2013/0249811 A1 discloses systems and/or processes for directly controlling user device with a mobile device incorporating a projector which projects a visual interface that is used to control the user device.

### [Disclosure of Invention]

### [Technical Problem]

Exemplary embodiments may overcome the above disadvantages and other disadvantages not described above. However, exemplary embodiments are not required to overcome the disadvantages described above, and an exemplary embodiment may not overcome any of the problems described above.

Exemplary embodiments provide an electronic device capable of intuitively recognizing an external device intended to be controlled by a user and providing various services using the recognized external device, and a method for providing a service thereof.

### [Solution to Problem]

According to an aspect of an exemplary embodiment, there is provided a method for controlling an external device with an electronic device according to claim 1.

The determining of the external device indicated by the electronic device may include: receiving signals broadcasted by the external device using a plurality of antennas; determining the external device indicated by the electronic device based on a phase difference and a signal strength of the signals received using the plurality of antennas; and performing a communication connection with the external device indicated by the electronic device.

The method may include, in response to determining that the electronic device indicates the external device, storing information about the external device and environment information sensed while the electronic device indicates the external device, or transmitting the information to an external server.

The determining of the external device indicated by the electronic device may include, in response to at least two external devices being present in a direction indicated by the electronic device, one external device indicated by the electronic device among the at least two external devices may be determined using additional environment information together with the phase difference and the signal strength of the signals received using the plurality of antennas.

The determining of the external device indicated by the electronic device may include: receiving a signal broadcasted from at least one external device; performing a communication connection with the at least one external device based on the received signal; requesting a signal for a location estimation of the at least one external device; receiving the signal for the location estimation using a plurality of antennas; and determining the external device indicated by the electronic device based on a phase difference and a signal strength of the signals for the location estimation received using the plurality of antennas.

The determining of the external device indicated by the electronic device includes: in response to at least two external devices being present in a direction indicated by the electronic device, a UI screen for selecting one external device of the at least two external devices may be provided, and in response to one external device being selected through the UI screen for selecting the external device, the selected external device may be determined as the one external device indicated by the electronic device.

The providing the UI screen of the application corresponding to the external device indicated by the electronic device may include: determining an application corresponding to the external device indicated by the electronic device; determining whether data for a UI screen of the determined application is prestored; and based on the determination of whether the application is prestored, providing the UI screen of the determined application using the prestored data.

The providing the UI screen of the application corresponding to the external device indicated by the electronic device may include: requesting data for the UI screen of the application corresponding to the external device indicated by the electronic device from an external server; receiving the data for the UI screen of the application from the external server; and providing the UI screen of the application using the received data for the UI screen of the application.

The III screen of the application may include at least one UI element for controlling the external device indicated by the electronic device.

The method may further include broadcasting whether the external device is present and connection related information to the external device while a communication connection between the electronic device and the external device indicated by the electronic device is performed.

According to an aspect of another exemplary embodiment, there is provided an electronic device according to claim 10.

The communicator may include a plurality of antennas configured to receive signals broadcasted by the external device, and the processor may be further configured to determine the external device indicated by the electronic device based on a phase difference and a signal strength of the signals received using the plurality of antennas, and perform a communication connection with the external device indicated by the electronic device.

The processor may be further configured to, in response to determining that the electronic device indicates the external device, control the communicator to store information about the external device and environment information sensed while the electronic device indicates the external device, or transmit the information to an external server.

The processor may be further configured to, in response to at least two external devices being present in a direction indicated by the electronic device, determine one external device indicated by the electronic device among the at least two external devices using additional environment information together with the phase difference and the signal strength of the signals received using the plurality of antennas.

The communicator may include a plurality of antennas configured to receive signals broadcasted by the external device, receive a signal broadcasted from at least one external device, perform a communication connection with the at least one external device, request a signal for a location estimation to the at least one external device, and receive the signal for the location estimation using the plurality of antennas; and the processor may be further configured to determine the external device indicated by the electronic device based on a phase difference and a signal strength of the signals for the location estimation received using the plurality of antennas.

The processor is further configured to, in response to at least two external devices being present in a direction indicated by the electronic device, control the display to provide a UI screen for selecting one of the at least two external devices, and in response to one external device being selected through the UI screen for selecting the external device, determine the selected external device as the one external device indicated by the electronic device.

The electronic device may further include a memory configured to store data for generating the UI screen of the application, wherein the processor may be further configured to control the display to determine an application corresponding to the external device indicated by the electronic device, determine whether data for a UI screen of the determined application is prestored, and based on the determination of whether the application is prestored, provide the III screen of the determined application using the prestored data.

The processor may be further configured to control the communicator to request data for the UI screen of the application corresponding to the external device indicated by the electronic device from an external server, control the communicator to receive the data for the UI screen of the application from the external server, and control the display to provide the UI screen of the application using the received data for the UI screen of the application.

The UI screen of the application may include at least one UI element for controlling the external device indicated by the electronic device.

The communicator may be further configured to broadcast whether the external device is present and connection related information to the external device while a communication connection between the electronic device and the external device indicated by the electronic device is performed.

According to an aspect of another exemplary embodiment, there is provided a non-transitory computer-readable storage medium storing a program to cause a computer to perform: in response to a trigger input being sensed, determining an external device from among a plurality of external devices that is indicated by the electronic device; providing a user interface (UI) screen of an application corresponding to the external device indicated by the electronic device; and in response to a user command being input through the UI screen of the application, transmitting a control signal corresponding to the user command to the external device indicated by the electronic device.

The non-transitory computer-readable storage medium may further cause a computer to perform: in response to determining that the electronic device indicates the external device, storing information about the external device and environment information sensed while the electronic device indicates the external device, or transmitting the information to an external server.

The determining of the external device indicated by the electronic device may include: in response to at least two external devices being present in a direction indicated by the electronic device, a UI screen for selecting one external device of the at least two external devices may be provided, and in response to one external device being selected through the UI screen for selecting the external device, the selected external device may be determined as the one external device indicated by the electronic device.

The UI screen of the application may include at least one UI element for controlling the external device indicated by the electronic device.

The non-transitory computer-readable storage medium may further cause a computer to perform: broadcasting whether the external device is present and connection related information to the external device while a communication connection between the electronic device and the external device indicated by the electronic device is performed.

### [Advantageous Effects of Invention]

As described above, according to the exemplary embodiments of the present disclosure, even though the electronic device does not accurately know a name or a service content of the external device intended to be controlled by the user, the electronic device recognizes the external device by only an operation of the user indicating the external device, thereby making it possible to more conveniently provide various services.

In particular, the electronic device may provide a UI screen capable of performing a communication connection with the external device and controlling the external device at the same time, by only the operation indicating the external device.

### [Brief Description of Drawings]

The above and/or other aspects will be more apparent by describing exemplary embodiments with reference to the accompanying drawings, in which:
FIG. 1 is a diagram illustrating a service provision system providing a service using an external device according to an exemplary embodiment;
FIG. 2 is a block diagram schematically illustrating a configuration of an electronic device according to an exemplary embodiment;
FIG. 3 is a block diagram illustrating a configuration of an electronic device according to an exemplary embodiment;
FIG. 4 is a diagram illustrating a module for providing a service using an external device according to an exemplary embodiment;
FIG. 5 is a flowchart illustrating a method for controlling an external device of the electronic device according to an exemplary embodiment;
FIGS. 6A to 7C are flowcharts and diagrams illustrating a method for determining an external device indicated by the electronic device according to an exemplary embodiment;
FIG. 8 is a flowchart illustrating a method for determining a service corresponding to the external device by the electronic device according to an exemplary embodiment;
FIG. 9 is a flowchart illustrating an example in which the electronic device broadcasts that another electronic device occupies the external device, according to an exemplary embodiment; and
FIG. 10A to 20B are examples in which the electronic device provides various services using the external device, according to one or more exemplary embodiments.

### [Best Mode for Carrying out the Invention]

Terms used in the present specification will be briefly described and exemplary embodiments will be described in detail.

In describing exemplary embodiments, general terms that are widely used are selected, but their meaning may be varied depending on an intention of those skilled in the art, a practice, an emergence of new technologies, and the like. In addition, there may be terms which are arbitrarily selected, and a meaning thereof will be described in detail in a description part of the disclosure corresponding to the terms.

Exemplary embodiments are illustrated in the drawings and are described in detail below. However, it is to be understood that the present disclosure is not limited to an exemplary embodiment, but includes all modifications, equivalents, and substitutions without departing from the scope and spirit of the present disclosure. In describing exemplary embodiments, if a description of known technologies would obscure the concepts, a detailed description may be omitted.

Terms such as first, second, etc., can be used to describe various components, but the components should not be limited to any order of importance. The terms are used to distinguish one component from the others, unless expressly indicated otherwise.

Here, singular forms include plural forms unless indicated otherwise. The terms "include" or "consist of" intend to designate the presence of features, numbers, steps, operations, components, elements, or a combination thereof that are written in the specification, but do not exclude the presence or possibility of addition of one or more other features, numbers, steps, operations, components, elements, or a combination thereof.

Expressions such as "at least one of," when preceding a list of elements, modify the entire list of elements and do not modify the individual elements of the list.

According to an exemplary embodiment, a 'module' or a 'unit' performs at least one function or operation, and may be implemented in hardware, software, or a combination of hardware and software. In addition, a plurality of 'modules' or a plurality of 'parts' may be integrated into at least one module and may be implemented with at least one processor, except for a 'module' or a 'part' in which they need to be implemented in specific hardware.

According to an exemplary embodiment, a case in which any one part is "connected" with the other part includes a case in which the parts are "directly connected" with each other and a case in which the parts are "electrically connected" with each other with other elements interposed therebetween. In addition, a case in which any one part is "connected" with the other part includes a physical connection as well as a wireless connection. In addition, unless explicitly described to the contrary, "comprising" any components will be understood to imply the inclusion of other elements rather than the exclusion of any other elements.

Below, exemplary embodiments will be described in detail with reference to the accompanying drawings. However, exemplary embodiments may be implemented in various different ways and are not limited to the exemplary embodiments described herein. In the accompanying drawings, similar reference numerals will be used to describe similar portions.

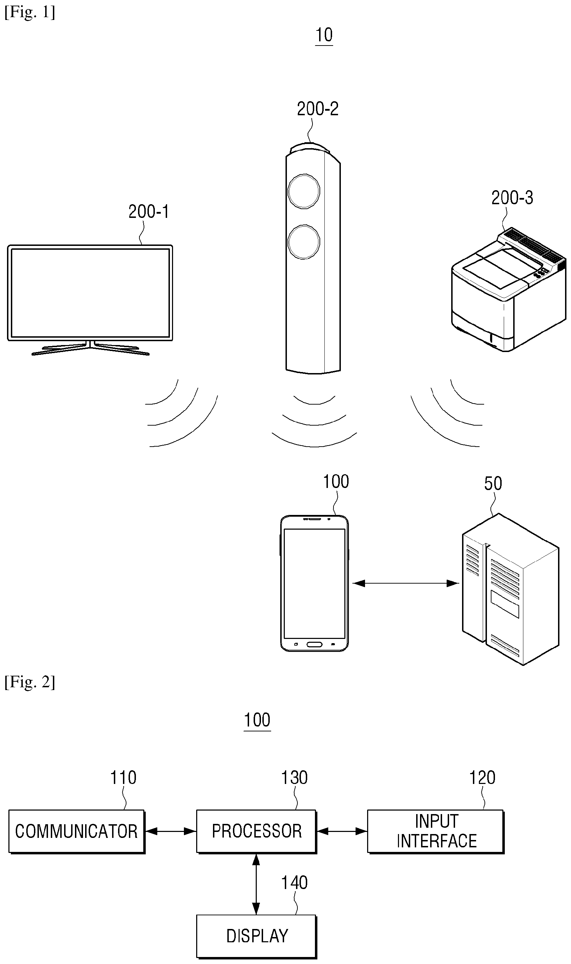

FIG. 1 is a diagram illustrating a service provision system providing a service using an external device according to an exemplary embodiment. A service provision system 10 includes an electronic device 100, a plurality of external devices 200-1 to 200-3, and a server 50. Here, the electronic device 100 may be implemented in a portable terminal such as a smart phone, a wearable device, a VR device, and the like, but these are merely examples, and the electronic device 100 may be implemented in other electronic devices (e.g., a remote controller, a tablet PC, a pointing device, a smart phone case, and the like). In addition, the plurality of external devices 200-1 to 200-3, which are devices which may be controlled by the electronic device 100 in an loT environment, may be described with other terms, e.g., a target device and an loT device. In particular, the plurality of external devices 200-1 to 200-3 may be implemented in various home appliances such as a smart TV 200-1, an air conditioner 200-2, a printer 200-3, and the like, as illustrated in FIG. 1. They may be implemented in portable terminals such as a smart phone, a wearable device, a VR device, and the like, and may also be implemented in sensors such as a motion sensor, a temperature sensor, a fine dust sensor, and the like, but are not limited thereto.

First, the electronic device 100 senses a trigger input for performing a service. Here, the service may be controlling a function of the electronic device 100 or the external device 200-n connected to the electronic device 100 to provide convenience to a user, e.g., a service controlling the function of the electronic device 100, a service controlling the function of the external device 200 through the electronic device 100, a service providing information through the electronic device 100 or the external device 200-n, and the like. Meanwhile, the service according to an exemplary embodiment may be a function, a task, an application, and the like.

In this case, the trigger input, which is a user input for performing the service, may be, for example, one from among a long press input in which a button of the electronic device 100 is pressed and held, a short press input in which a button is pressed for a short period of time, a user input touching a UI element displayed on a display, a gesture input, shaking the electronic device 100 one or multiple times, and a voice input including a word or phrase. However, exemplary embodiments are not limited and the trigger input may be implemented in many various ways.

If the trigger input is sensed, the electronic device 100 may determine an external device indicated by the electronic device 100 among the plurality of external devices 200-1, 200-2, and 200-3. According to an exemplary embodiment, the electronic device 100 may determine the external device indicated by the electronic device using signals broadcasted by the plurality of external devices. In this case, the signals broadcasted by the external devices may be signals into which an advertising packet including information on the external devices is inserted. In particular, the electronic device 100 may determine the external device by using at least one of a phase difference and signal strength of signals received through a plurality of antennas.

In a case in which the external device indicated by the electronic device 100 is determined, the electronic device 100 determines the service corresponding to the determined external device. The electronic device 100 may determine the service corresponding to the external device based on a service list which is prestored based on information of the determined external device. The electronic device 100 may determine the service corresponding to the external device by receiving the information on the external device from the external device itself, and may also determine the service by transmitting the information on the external device to the external server 50 to receive information on the service corresponding to the external device.

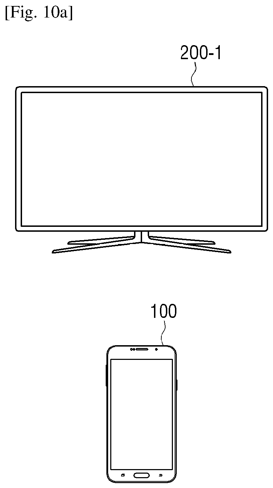

According to an exemplary embodiment, the service corresponding to the external device may be a service providing a UI screen of an application corresponding to the external device, a service sharing the contents provided from the electronic device 100 with the external device, and the like, but these are merely examples, and other services may also be included. This will be described below in detail with reference to FIGS. 10A to 20B.

In addition, the electronic device 100 may provide the service corresponding to the determined external device to the user. For example, the electronic device 100 may provide a UI screen of an application for controlling the determined external device to the user, and may share the contents with the determined external device.

According to the service provision system 10 as described above, the user may more intuitively select the external device through a motion indicating the external device by the electronic device 100 to control the external device.

FIG. 2 is a block diagram schematically illustrating a configuration of the electronic device 100 according to an exemplary embodiment. As illustrated in FIG. 2, the electronic device 100 includes a communicator 110, an input unit 120 (e.g., input interface), a processor 130, and a display 140.

The communicator 110 (e.g., a communication interface) performs communication with the external device 200 and the server 50. In particular, the communicator 110 may receive a signal broadcasted by the external device 200. In this case, the signal broadcasted by the external device 200, which is a signal including an advertising packet, may include information on the external device 200. In addition, the communicator 110 may perform a communication connection with the external device 200 to transmit a signal for controlling the external device 200 or receive information from the external device 200.

In particular, the communicator 110 may include a plurality of antennas receiving the signal broadcasted by the external device 200. The communicator 110 may determine the external device 200 indicated by the electronic device 100 based on at least one among a phase difference and signal strength of signals received through the plurality of antennas.

The input unit 120 senses a user input. In particular, the input unit 120 may sense the trigger input for providing the service. In addition, the input unit 120 may sense a user input for controlling the external device 200 through a UI screen of an application corresponding to the external device 200.

The display 140 provides an image. In particular, the display 140 provides the UI screen of the application corresponding to the external device 200. In this case, the UI screen of the application may include at least one UI element for controlling the external device 200.

The processor 130 controls an overall operation of the electronic device 100. Specifically, if the trigger input is sensed by the input unit 120, the processor 130 may determine an external device indicated by the electronic device 100 among the plurality of external devices 200-1, 200-2, and 200-3, and may determine a service corresponding to the external device indicated by the electronic device 100 to thereby provide the determined service. According to an exemplary embodiment, the processor 130 may control the display 140 to provide the UI screen of the application corresponding to the external device 200 indicated by the electronic device 100, and may control the communicator 110 to transmit a control signal corresponding to a user command to the external device 200 when the user command for controlling the external device 200 is input through the UI screen of the application.

Specifically, the processor 130 may determine the external device 200 indicated by the electronic device 100 based on the phase difference and the signal strength of the signals received through the plurality of antennas. More specifically, if the phase difference or a difference of signal strength of the signals received from the first external device 200 through the plurality of antennas is a preset value or less, the processor 130 may determine that the electronic device 100 indicates the first external device. In this case, the processor 130 may control the communicator 110 to perform the communication connection with the external device 200 indicated by the electronic device 100. In addition, in a case in which at least two external devices are present in a direction indicated by the electronic device 100, the processor 130 may determine one external device 200 indicated by the electronic device 100 from among at least two external devices using additional environment information together with the phase difference and the signal strength of the signals received through the plurality of antennas. In this case, the environment information may include motion information sensed by the motion sensor, AP information, image information on surrounding environment, and the like.

In a case in which it is determined that the electronic device 100 indicates the external device, the processor 130 may control the communicator 110 to store information about the external device and the environment information sensed while the electronic device 100 indicates the external device, or transmit the above-mentioned information to the external server 50. Thereby, the electronic device 100 may more accurately detect the external device indicated by the electronic device 100.

Although an exemplary embodiment described above describes the case in which the external device 200 broadcasts the signal, this is merely an example. In a case in which the external device 200 does not broadcast a separate signal, the processor 130 may compare the sensed environment information and prestored environment information with each other to thereby determine the external device indicated by the electronic device 100.

According to another exemplary embodiment, the communicator 110 may receive the signals broadcasted from at least one external device to perform the communication connection with at least one external device, may request signals for a location estimation to at least one device, and may receive the signals for the location estimation using the plurality of antennas. In addition, the processor 130 may determine the external device 200 indicated by the electronic device 100 based on the phase difference and the signal strength of the signals of the location estimation received through the plurality of antennas. According to another exemplary embodiment, in a case in which at least two external devices are present in the direction indicated by the electronic device 100, the processor 130 controls the display 140 to provide a UI screen for selecting one of at least two external devices. In addition, if one external device is selected through the UI screen for selecting the external device, the processor 130 determines the selected external device as one external device 200 indicated by the electronic device 100.

After the external device indicated by the electronic device 100 is determined, the processor 130 may determine the service corresponding to the determined external device 200. In this case, the processor 130 may determine the service corresponding to the external device 200 based on a prestored protocol or a protocol received from the external server 50.

In a case in which the electronic device 100 indicates a plurality of services corresponding to the external device 200, the processor 130 may control the display to provide a UI for selecting one of the plurality of services. According to an exemplary embodiment, the processor 130 may control the display 140 to provide a UI screen of an application corresponding to the external device 200 indicated by the electronic device 100.

The processor 130 may obtain the UI screen of the application by various methods to thereby provide the UI screen through the display 140. Specifically, the processor 130 may determine an application corresponding to the external device 200 indicated by the electronic device 100, may determine whether or not data for the UI screen of the determined application is prestored, and may control the display 140 to provide the UI screen of the determined application using the prestored data.

The processor 130 may control the communicator 110 to receive information (e.g., ID information, version information, etc., of the application) about the application corresponding to the external device 200 indicated by the electronic device 100 from the external device 200. Here, in a case in which the application corresponding to the external device 200 is pre-installed in the electronic device 100, the processor 130 may control the display 140 to provide the UI screen using data of the pre-installed application. In a case in which the application corresponding to the external device 200 is not installed in the electronic device 100 or the application is not an updated version, the processor 130 may control the communicator 110 to download data for an application of an updated version from the external server 50 using information (e.g., address information) on the application received from the external device 200 in order to install the application of the updated version. In addition, the processor 130 may control the display 140 to provide the UI screen using the downloaded data for the application of the updated version.

Alternatively, the processor 130 may control the communicator 110 to be connected to the external server 50 to obtain data for the UI screen of the application corresponding to the external device 200 indicated by the electronic device 100 using the information (e.g., URL information) on the application received from the external device 200. In addition, the processor 130 may control the communicator 110 to receive the data for the UI screen of the application from the external server 50, and may control the display 140 to provide the UI screen of the application using the received data for the UI screen of the application. As described above, by providing the UI screen of the application using the external server 50, the electronic device 100 may control the external device 200 through a web application without performing a separate installation process.

In addition, in a case in which the electronic device 100 indicates a plurality of external devices 200-1, 200-2, and 200-3, the processor 130 may provide a UI screen of an application corresponding to the plurality of external devices 200-1, 200-2, and 200-3. For example, in a case in which the electronic device 100 indicates a first speaker, a second speaker, and a third speaker, the processor 130 may provide the III screen of the application corresponding to a plurality of speakers. In this case, the UI screen of the application corresponding to the plurality of speakers may include a UI element for turning-on/off power, a UI element for playing music contents, a UI element for adjusting a volume, and the like.

In addition, after a trigger input selecting a UI element for a specific function is sensed, the electronic device 100 indicates the plurality of external devices 200-1, 200-2, and 200-3, the electronic device 100 may control the communicator 110 to transmit a control command for performing the specific function to the plurality of external devices. For example, after a trigger input selecting a power off button is sensed, in a case in which the electronic device 100 indicates a TV 200-1 and an air conditioner 200-2, the electronic device 100 may control the communicator 110 to transmit a control command for turning-off power to the TV 200-1 and the air conditioner 200-2.

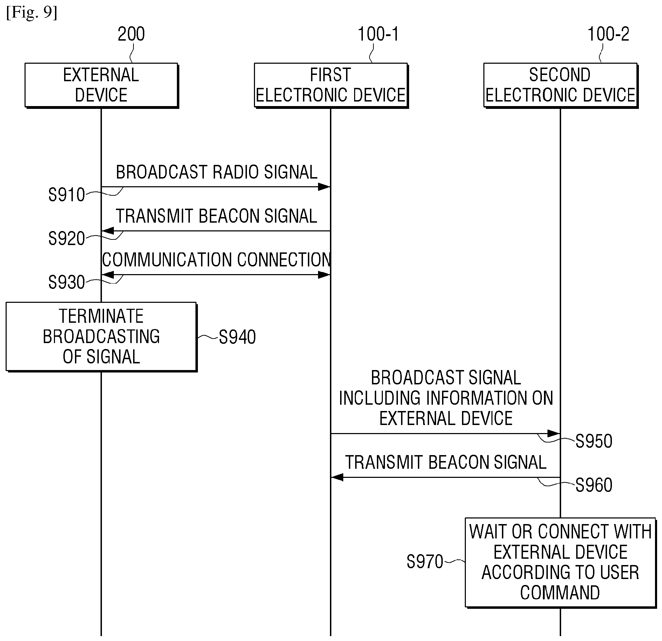

According to an exemplary embodiment, while the electronic device 100 and the external device 200 indicated by the electronic device 100 are communicatively connected to each other, the processor 130 may broadcast whether or not the external device 200 is present and connection related information to an external electronic device. This will be described in detail with reference to FIG. 9.

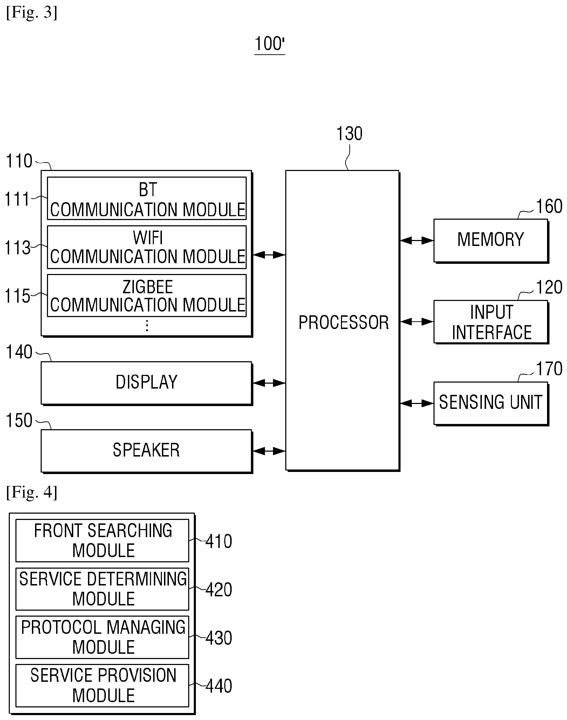

FIG. 3 is a block diagram illustrating a configuration of an electronic device 100' according to an exemplary embodiment in detail. As illustrated in FIG. 3, the electronic device 100' includes a communicator 110, a display 140, a speaker 150, a memory 160, an input unit 120 (e.g., input interface), a sensing unit 170, and a processor 130.

The configuration of the electronic device 100' illustrated in FIG. 3 is merely an example, and exemplary embodiments are not limited to the block diagram described above. Therefore, some of the configuration of the electronic device 100' illustrated in FIG. 3 may also be omitted, modified, or added depending on a kind of the electronic device 100' or a purpose of the electronic device 100'. The communicator 110 performs communication with an external device 200 or an external server 50. In particular, the communicator 110 may include a Bluetooth (BT) communication module 111, a Wi-Fi communication module 113, and a Zigbee communication module 115, as illustrated in FIG. 3.

The BT communication module 111 and the Wi-Fi communication module 113 may first transmit and receive a variety of connection information such as SSID and a session key using a Bluetooth chip or a Wi-Fi chip, may perform a communication connection using the variety of connection information, and may then transmit and receive a variety of information.

In this case, the BT communication module 111 may include at least one of a plurality of antennas, a switch, a transceiver, and a processor. In particular, the BT communication module 111 using the plurality of antennas may be implemented in one path scheme and a two path scheme. One path scheme is a scheme in which one transceiver transmits radio signals received through the plurality of antennas to the processor. In particular, in one path scheme, the transceiver may alternately transmit the radio signals received through the plurality of antennas to the processor using the switch. The two path scheme is a scheme in which a plurality of corresponding transceivers each transmit the radio signals received through the plurality of antennas to the processor. That is, the radio signals received through the antennas corresponding to the plurality of transceivers may be transmitted to the processor.

Meanwhile, although an exemplary embodiment described above describes the case in which the BT communication module 111 receives the radio signals using the plurality of antennas, this is merely an example, and the Wi-Fi communication module 113 may also receive the radio signals using the plurality of antennas.

Besides, the communicator 110 may include various communication modules such as an NFC communication module and an ultrasonic communication module.

Meanwhile, the BT communication module 111 according to an exemplary embodiment may include a Bluetooth low energy (BLE) communication module which is supported by a standard of Bluetooth 4.0 or more.

The display 140 displays various image data and Uls. In particular, the display 140 may provide a UI screen of an application. In addition, the display 140 may provide various Uls such as a UI capable of selecting one of a plurality of external devices, a UI for selecting one of a plurality of services, a service guide UI, and the like.

Meanwhile, according to an exemplary embodiment, the display 140 may be implemented in a touch screen by being coupled to a touch input unit, and may also be coupled to at least one of a front region, a side region, and a rear region of the electronic device 100 in a form of a flexible display. The flexible display may be bent, folded, or rolled without being damaged using a thin and flexible substrate such as a paper.

The speaker 150 is a component that outputs a variety of alarm sounds or voice messages as well as a variety of audio data for which various processing tasks such as decoding, amplification, and noise filtration are performed by an audio processor. According to another exemplary embodiment, the electronic device 100' may further include an output terminal as a component for outputting an audio.

The memory 160 stores various modules for driving the electronic device 100'. For example, the memory 160 may store software including a base module, a sensing software module, a communication software module, a presentation module, a web browser module, and a service module. In this case, the base module is a basic module processing signals transmitted from the respective hardware included in the electronic device 100' and transmitting the signals to a high layer module. The sensing software module, which is a module collecting information from a variety of sensors, and analyzing and managing the collected information, may also include a face recognizing module, a voice recognizing module, a motion recognizing module, an NFC recognizing module, and the like. The presentation module, which is a module for configuring a display screen, may include a multimedia module for reproducing and outputting multimedia contents and a UI rendering module performing a UI and graphic processing. The communication software module is a module for performing communication with the outside through the communicator 110. The web browser module refers to a module performing a web browsing to access a web server. The service module is a module including a variety of applications for providing various services.

As described above, the memory 160 may include various program modules, but some of various program modules may be omitted, modified, or added depending on a kind and feature of the electronic device 100'.

In addition, the memory 160 includes a module for using a service using the external device 200, as illustrated in FIG. 4.

A front searching module 410 is a module determining the external device 200 which is frontally indicated by the electronic device 100. In particular, the front searching module 410 may determine the external device 200 which is frontally indicated by the electronic device 100 using at least one of a phase difference and signal strength of radio signals received through the plurality of antennas of the communicator 110. In addition, the front searching module 410 may determine the external device 200 which is frontally indicated by the electronic device 100 through environment information. In this case, the front searching module 410 may store information (e.g., UUID, local name, MAC address, etc.) of various external devices in a database.

A service determining module 420 is a module determining a service corresponding to the external device indicated by the electronic device 100. In this case, the service determining module 420 may determine the service corresponding to the external device using a prestored database, and may transmit information on the external device to the external server 50 to thereby receive information on the service corresponding to the external device. Here, the service may be a web application itself.

A protocol managing module 430 is a module managing a protocol between the electronic device 100' and the external device 200. In this case, the protocol, which is a communication protocol, may also be a framework in which a standard protocol is defined, and may be an application itself as a non-standard protocol. Examples of the existing framework of the standard protocol for manipulating the external device 200 include loTivity of OIC and Alljoyn of Allseen Alliance. The external device 200 is classified into a case in which it uses the standard protocol such as loTivity or Alljoyn, and a case in which it use a non-standard protocol. The external devices using the standard protocol broadcast the radio signal including an advertising packet including information that they use the standard protocol to the outside. For example, loTivity broadcasts the UUID called "ADE3D529-C784-4F63-A987-EB69F70EE816" to inform peripheral devices that it is an loTivity compatible device.

The protocol managing module 430 uses the local name and the UUID to classify a class between the devices. In particular, in a case in which the standard protocol framework is used, the protocol managing module 430 classifies and matches the framework according to the UUID, and in a case in which the non-standard protocol is used, the protocol managing module 430 classifies the class of the external device 200 using the local name and matches the application as the protocol. Basically, in a matching method, since a database corresponding to the UUID and the local name is pre-built, the database is used.

A service provision module 440 is a module providing the service determined by the service determining module 420 to the protocol managed by the protocol managing module 430. For example, the service provision module 440 may provide a UI screen of an application corresponding to the external device 200 indicated (or directed) by the electronic device 100.

Again referring to FIG. 3, the input unit 120 is input with a user command. In this case, the input unit 120 may sense the trigger input for providing the service, and may sense a user input for selecting a specific service.

Meanwhile, the input unit 120 may be implemented as a touch input unit, but this is merely an example. The input unit 120 may be implemented as various input devices such as a button input unit, a mouse, a keyboard, and the like.

The sensing unit 170 senses a variety of information using various sensors. In particular, the sensing unit 170 may sense the environment information. In this case, the environment information may include motion information, surrounding image information, and the like. For example, the sensing unit 170 may sense the motion information using the motion sensor (e.g., an accelerator sensor, a gyro sensor, a geomagnetic sensor, or the like), and may obtain the image information using a camera sensor.

The processor 130 controls an overall operation of the electronic device 100. In particular, if the trigger input is sensed by the input unit 120, the processor 130 may determine the external device 200 indicated by the electronic device 100 among the plurality of external devices. In addition, the processor 130 may control the display 140 to provide a UI screen of an application corresponding to the external device 200 indicated by the electronic device 100. If the user command is input through the UI screen of the application, the processor 130 may control the communicator 110 to transmit the control signal corresponding to the user command to the external device 200 indicated by the electronic device 100.

Meanwhile, the processor 130 according to an exemplary embodiment may be implemented in various hardware such as an application processor (AP), a central processing unit (CPU), a graphic processing unit (GPU), and the like.

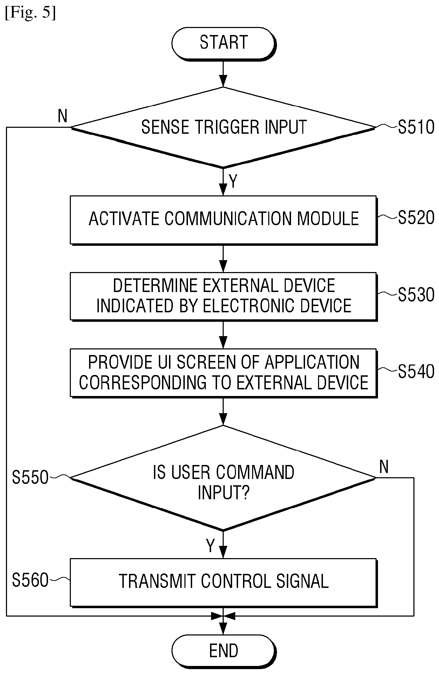

Below, a method for providing a service of an electronic device will be described with reference to FIG. 5.

First, the electronic device 100 senses a trigger input (S510). In this case, the trigger input may be an input (e.g., a long press input, a double touch input, etc.) manipulating a physical button or a UI element, or an input selecting a UI element for performing a specific function. According to another exemplary embodiment, the trigger input may be a motion input taking a specific motion, and may be a voice input including a specific word.

If the trigger input is sensed (Y in S510), the electronic device 100 activates the communication module (e.g., a BT communication module, or the like) (S520). In this case, the communication module may receive the radio signal broadcasted by the external device 200 using the plurality of antennas. Meanwhile, according to another exemplary embodiment, the communication module may be activated before the trigger input is sensed, and if the communication module is activated before the trigger input is sensed, the operation (S520) may be omitted.

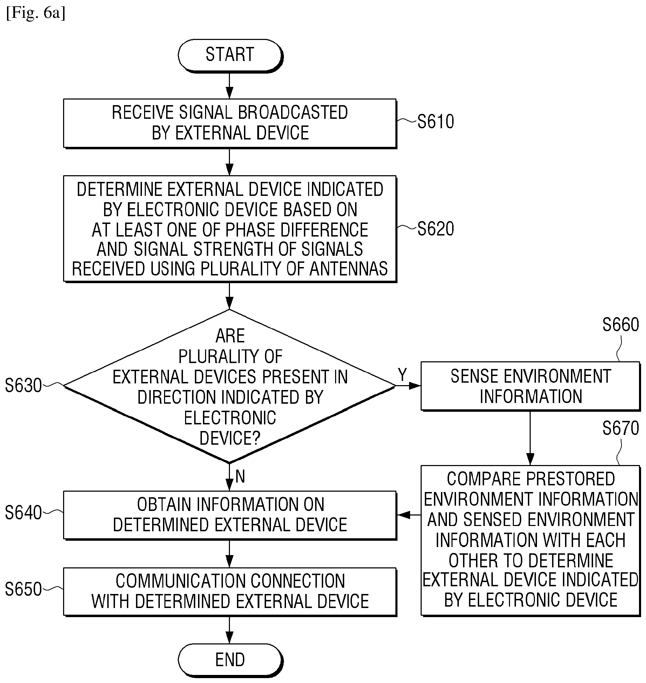

In addition, the electronic device 100 determines the external device 200 indicated by the electronic device 100 (S530). This will be described in detail with reference to FIGS. 6A to 7C.

The electronic device 100 provides a UI screen of an application corresponding to the determined external device 200 (S540). As an example, the electronic device 100 may provide the UI screen of the application using data for the UI screen of the application stored in the memory. Specifically, the processor 130 may determine an application corresponding to the external device 200 indicated by the electronic device 100, may determine whether or not data for the UI screen of the determined application is prestored, and may control the display 140 to provide the UI screen of the determined application using the prestored data. For example, in a case in which the external device 200 indicated by the electronic device 100 is a TV, the processor 130 determines a TV control application with an application corresponding to the TV, and determines whether or not a UI screen of the TV control application is prestored. In addition, in a case in which the UI screen of the TV control application is prestored, the processor 130 may read the prestored UI screen of the TV control application and provide the UI screen through the display 140.

As another example, the electronic device 100 may receive data for the III screen of the application from the external server 50 to thereby provide the UI screen of the application. Specifically, the processor 130 may control the communicator 110 to request data for the UI screen of the application corresponding to the external device 200 indicated by the electronic device 100 from the external server 50. In this case, the request signal may include information on at least one of the electronic device 100 and the external device 200. In addition, the processor 130 may control the communicator 110 to receive the data for the UI screen of the application from the external server 50, and may control the display 140 to provide the UI screen of the application using the received data for the UI screen of the application. For example, in a case in which the external device 200 indicated by the electronic device 100 is an air conditioner, the processor 130 may transmit a request signal including information on the air conditioner and the electronic device 100 to the external server 50. The external server 50 may transmit data for a UI screen of an air conditioner control application corresponding to the air conditioner to the electronic device 100 based on the information included in the request signal. The processor 130 may control the display 140 to provide the UI screen of the air conditioner control application using the data for the UI screen of the air conditioner control application.

In this case, the application to which the UI screen provided from the external server 50 is provided may be a web application that does not require an installation process.

In addition, the electronic device 100 determines whether or not a user command is input to the UI screen of the application (S550).

In the case in which the user command is input, the electronic device 100 transmits a control signal corresponding to the input user command to the external device 200 indicated by the electronic device 100 (S560).

According to an exemplary embodiment as described above, the user may perform the communication connection with the electronic device 100 through only an operation that the electronic device 100 indicates the external device 200 intended to be controlled, and may provide the UI capable of controlling the external device 200.

FIG. 6A is a flowchart illustrating a method for determining an external device 200 indicated by an electronic device 100 according to an exemplary embodiment.

The electronic device 100 receives the radio signal broadcasted by the external device 200 using the communicator 110 (S610).

The electronic device 100 determines the external device 200 indicated by the electronic device 100 based on at least one of a phase difference and signal strength of radio signals received through the plurality of antennas (S620).

Specifically, the external device 200 broadcasts the radio signals (e.g., an RF signal, an optical signal, a sound signal, an ultrasonic signal, etc.) including identity information of the external device 200. Here, the identity information of the external device 200 may refer to unique information capable of identifying the external device 200 such as UUID, a local name, device ID, and MAC address of Bluetooth, SSID and MAC address of Wi-Fi, and the like.

In addition, the communicator 110 receives the radio signals broadcasted from the external device 200 using a first antenna and a second antenna. In addition, the communicator 110 may obtain at least one of phase information and signal strength information (e.g., RSSI) of the radio signals received through the first antenna and the second antenna. Here, in a case in which the communicator 110 includes the communication module of one path scheme, the communicator 110 may alternately receive the radio signals received through the plurality of antennas according to a switching operation. Here, when an additional waveform having a constant period is present in the radio signals received by the transceiver through the switching from the plurality of antennas, the processor of the communicator 110 may estimate at least one of phase information and signal strength information of the switched radio signals utilizing the period of the additional waveform and a switching time difference. Alternatively, in a case in which the communicator 110 includes the communication module of a two path scheme, the communicator 110 may obtain the radio signals received through the plurality of antennas using a plurality of transceivers. In this case, the processor of the communicator 110 may obtain at least one of phase information and signal strength information of each of a plurality of radio signals received through the plurality of transceivers.

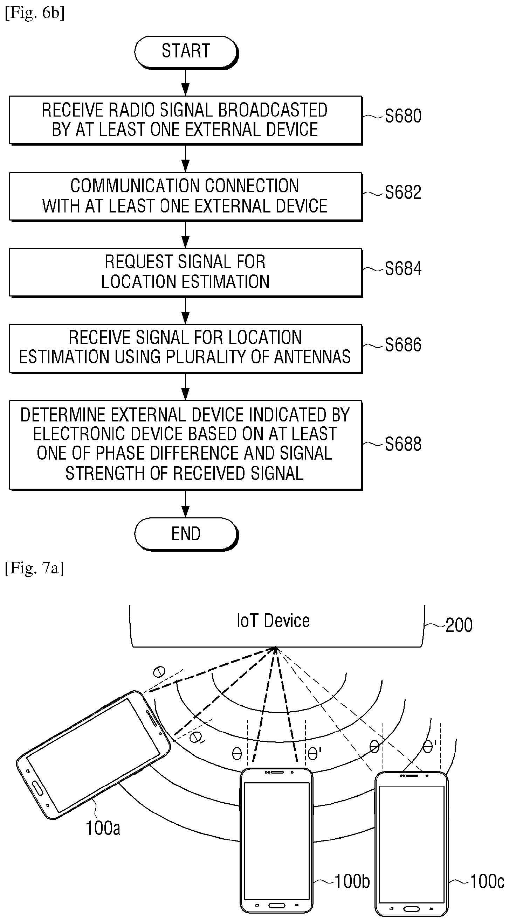

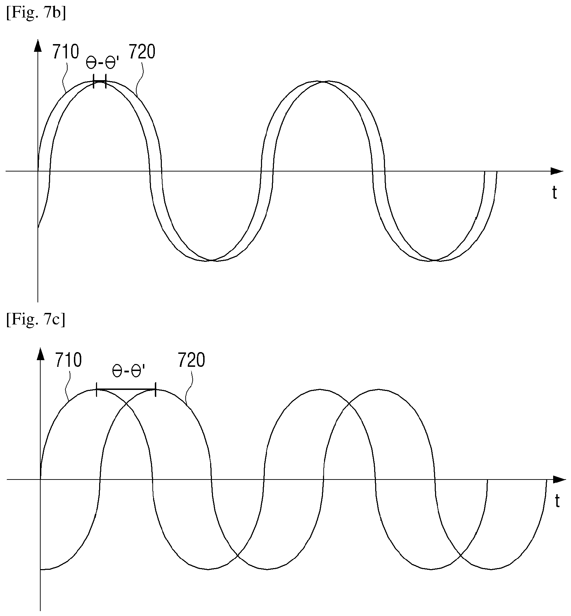

In addition, in states such as 100a and 100b of FIG. 7A, a phase difference (θ-θ') between a first radio signal 710 received through a first antenna and a second radio signal 720 received through a second antenna may be a degree of a, which is a preset value or less, as illustrated in FIG. 7B. That is, in a case in which the phase difference (θ-θ')is the preset value or less, since it means that the electronic device 100 frontally indicates the external device 200, the processor 130 may determine the external device 200 broadcasting the radio signal as the external device 200 indicated by the electronic device 100. For example, in a case in which the phase difference is 7.5° or less, it may be determined that the electronic device 100 indicates the external device 200.

However, in a state such as 100c of FIG. 7A, the phase difference (θ-θ') between the first radio signal 710 received through the first antenna and the second radio signal 720 received through the second antenna may be a degree of b, which exceeds the preset value, as illustrated in FIG. 7C. That is, in a case in which the phase difference (θ-θ') exceeds the preset value, the processor 130 may determine that the external device 200 broadcasting the radio signal is not the external device 200 indicated by the electronic device 100.

According to another exemplary embodiment, the processor 130 may compare signal strengths of the signals received through the plurality of antennas to thereby determine the external device 200 indicated by the electronic device 100. Specifically, in a case in which a difference of the signal strengths of the first radio signal received through the first antenna and the second radio signal received through the second antenna is the preset value or less, the processor 130 may determine that the external device 200 broadcasting the radio signal is the external device 200 indicated by the electronic device 100. However, in a case in which a difference of the signal strengths of the first radio signal received through the first antenna and the second radio signal received through the second antenna exceeds the preset value, the processor 130 may determine that the external device 200 broadcasting the radio signal is not the external device 200 indicated by the electronic device 100.

Meanwhile, although an exemplary embodiment described above describes a case in which the processor 130 uses the phase difference and the difference of the signal strengths of the radio signals received through the plurality of antennas, respectively, this is merely an example, and both of the phase difference and the signal strength may be used. That is, the processor 130 may determine the external device 200 indicated by the electronic device 100 by simultaneously using the phase difference and the difference of the signal strengths of the radio signals received through the plurality of antennas.

In addition, in a case in which the external device 200 broadcasts the radio signals in an indoor space, the communicator 110 may receive a direct signal which is directly transmitted and a reverberation signal which is reflected by an object such as a wall to be transmitted among the radio signals broadcasted by the external device 200. In this case, a problem may occur that it is difficult for the processor 130 to determine the external device 200 indicated by the electronic device 100 due to the reverberation signal. In order to solve the above-mentioned problem, the electronic device 100 may extract channel state information (CSI) from the broadcasted radio signals. Here, the CSI includes information on signal amplitude and phase for each of channels of the radio signal. Therefore, the processor 130 may classify the direct signal and the reverberation signal by the CSI, and may determine the external device 200 indicated by the electronic device 100 using only the classified direct signal. Besides, the processor 130 may classify the direct signal by estimating a direction in which the radio signal is received, based on a multiple signal classification (MUSIC) algorithm or an estimation of signal parameters via rotational invariance techniques (ESPRIT) algorithm.

Although an exemplary embodiment described above describes the case in which the processor 130 determines the external device 200 indicated by the electronic device 100 using at least one of the phase difference and the difference of the signal strengths of the radio signals received through the plurality of antennas, this is merely an example, and the processor 130 may determine the external device 200 indicated by the electronic device 100 using other methods. For example, the processor 130 may determine the external device 200 indicated by the electronic device 100 using a flight time difference of the radio signals received from the plurality of antennas. For example, the processor 130 may compare information on a transmission start time stamp included in each of the radio signals received through the plurality of antennas and information on a time stamp at which the radio signal arrives the electronic device 100 with each other to thereby calculate the flight time. In addition, in a case in which the flight time difference of the radio signals received from the plurality of antennas is a preset value or less, the processor 130 may determine that the corresponding external device is the external device 200 indicated by the electronic device 100.

According to another exemplary embodiment, the processor 130 may determine the external device 200 indicated by the electronic device 100 using a difference of a time of arrival of the radio signals received from the plurality of antennas. In this case, the time of arrival may be information on a time at which the radio signals arrive at the plurality of antennas. In addition, in a case in which the difference of the time of arrival of the radio signals received from the plurality of antennas is a preset value or less, the processor 130 may determine that the corresponding external device is the external device 200 indicated by the electronic device 100.

According to another exemplary embodiment, the processor 130 may generate beams having directivity in a front direction through the plurality of antennas. In this case, a plurality of devices located within the beam in the front direction transmits a response signal to the electronic device 100 emitting the beam. The electronic device 100 may determine the plurality of devices located within the beam in the direction indicated by the electronic device 100 as the external devices 200 through a response signal. Here, in a case in which the response signal for the radio signal having beamforming characteristics is received, the processor 130 may determine the external device transmitting the response signal as the external device 200 indicated by the electronic device 100.

Meanwhile, although an exemplary embodiment described above describes the case in which the processor of the communicator 110 extracts only the phase information and the signal strength information of the radio signals received through the plurality of antennas, and the processor 130 determines the external device 200 indicated by the electronic device 100 by calculating the phase difference and the difference of the signal strengths from the phase value and the signal strength value, this is merely an example, and the processor of the communicator 110 and the processor 130 may perform functions different from the functions described above. For example, the processor of the communicator 110 may extract a direction angle which is directed by the electronic device 100 using at least one of the phase information and the signal strength information of the radio signals received through the plurality of antennas, and the processor 130 may determine the external device 200 indicated by the electronic device 100 based on the direction angle. As another example, the processor of the communicator 110 may extract the direction angle which is directed by the electronic device 100 using at least one of the phase information and the signal strength information of the radio signals received through the plurality of antennas, and may determine the external device 200 indicated by the electronic device 100 based on the direction angle.

In addition, the electronic device 100 determines whether or not a plurality of external devices are present in the direction indicated by the electronic device 100 (S630).

In the case in which one external device is present in the direction indicated by the electronic device 100 (N in S630), the electronic device 100 obtains information on the determined external device (S640). For example, the electronic device 100 may obtain a local name or UUID of the external device through identity information included in the broadcasted radio signals, and may obtain a variety of information (e.g., a product name, a manufacturer, a protocol, an MAC address, etc.) on the external device 200 using a prestored external device list through the obtained local name or UUID.

In addition, the electronic device 100 performs a communication connection with the determined the external device 200 (S650). That is, the electronic device 100 may perform the communication connection with the external device 200 indicated by the electronic device 100 based on the information (e.g., UUID, the MAC address, etc.) on the external device. In this case, the electronic device 100 may perform the communication connection with the external device through the BT communication module 111, but this is merely an example, and the electronic device 100 may perform the communication connection with the external device 200 through other communication modules (e.g., the Zigbee communication module, etc.). In addition, the electronic device 100 may go through a paring process at the time of initially connecting with the external device 200.

In particular, the processor 130 may sense the environment information and control the communicator 110 to transmit the environment information to the external server 50. Specifically, the processor 130 may sense a variety of environment information and then transmit the environment information to the external server 50 in order to more accurately determine the external device frontally indicated by the electronic device later. Here, the environment information may be, for example, motion information obtained by extracting direction information such as a compass orientation utilizing values obtained from the sensors such as the GPS sensor, the geomagnetic sensor, the accelerator sensor, the gyro sensor, and the like included in the sensing unit 170, and may include surrounding image information, surrounding image information photographed by a camera, surrounding Wi-Fi AP information obtained by a wireless communication module, RSSI strength information, BT/BLE information, and RSSI strength information. In this case, the electronic device 100 may store the sensed environment information in the memory 160.

However, in a case in which the plurality of external devices are present in the direction indicated by the electronic device 100 (Y in S630), the electronic device 100 senses the environment information (S660). In this case, the environment information may include the motion information, the surrounding image information, the connected AP information, and the like, as described above.

In addition, the electronic device 100 compares prestored environment information and the sensed environment information with each other to thereby determine the external device indicated by the electronic device (S670). For example, when a TV is put over the same direction and a DVD player is put below the same direction, the electronic device 100 may more accurately determine that the electronic device 100 is directed to the DVD player based on motion information that the electronic device 100 is directed downwardly, or photographed surrounding image information.

Meanwhile, although an exemplary embodiment described above describes the case in which when the external device 200 broadcasts the radio signals, the external device indicated by the electronic device is determined using the radio signals, this is merely an example. In the case in which the external device 200 does not broadcast the radio signals, or the radio signals are very weak, the electronic device 100 may determine the external device indicated by the electronic device 100 based on the environment information.

FIG. 6B is a flowchart illustrating a method for determining an external device 200 indicated by an electronic device 100 according to another exemplary embodiment.

First, the electronic device 100 receives the radio signal broadcasted by at least one external device (S680). In this case, an advertising packet including identity information on the external devices may be inserted into the radio signal broadcasted by at least one external device.

In addition, the electronic device 100 performs a communication connection with at least one external device 200 (S682). The electronic device 100 may perform the communication connection with at least one external device 200 based on the identity information included in the radio signal.

In addition, the electronic device 100 requests a signal for location estimation to at least one external device 200 (S684). In the case in which at least one external device receives a request signal requesting the signal for the location estimation, the external device receiving the request signal may transmit the signal for the location estimation. In this case, the signal for the location estimation may be a signal formed in a specific pattern in order to calculate a phase difference of the signals received through the plurality of antennas.

In addition, the electronic device 100 receives the signal for the location estimation using the plurality of antennas (S686).

In addition, the electronic device 100 determines the external device 200 indicated by the electronic device 100 based on at least one of a phase difference and signal strength of the received signals (S688). In this case, since the operation (S688) is identical to the operation (S620), a detailed description thereof will be omitted.

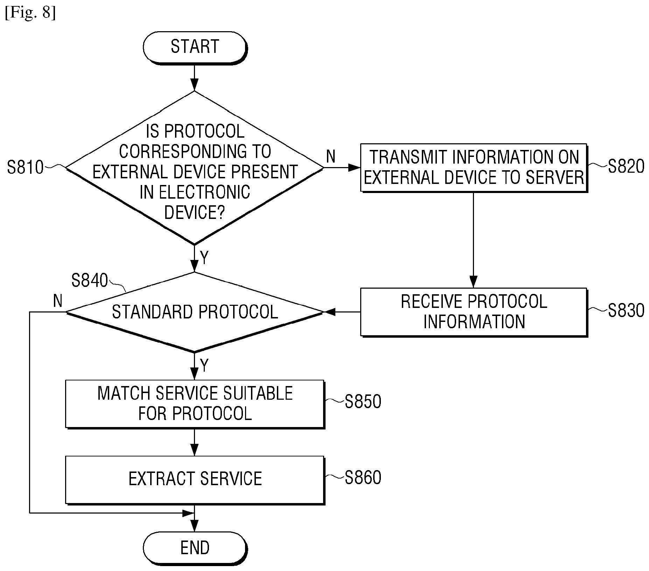

FIG. 8 is a flowchart illustrating a method for determining a service corresponding to the external device by the electronic device according to an exemplary embodiment.

First, the electronic device 100 determines whether or not a protocol corresponding to the external device 200 indicated by the electronic device 100 is present within the electronic device 100 (S810). Specifically, the processor 130 may confirm whether or not a protocol matched to the UUID or the local name obtained through the radio signals is present.

If the protocol corresponding to the external device 200 is not present (N in S810), the electronic device 100 transmits the information on the external device 200 to the server 50 (S820). In addition, the electronic device 100 receives information on the protocol through the external server 50 (S830). In particular, the external server 50 transmits information on the framework defined in the standard protocol when information on the UUID is received, and recommends a service to which the non-standard protocol is applied when information on the local name is received.

If the protocol corresponding to the external device 200 is present (Y in S810) or the information on the protocol is received through the external server 50 (S830), the electronic device 100 determines whether or not the protocol is a standard protocol (S840).

If the protocol is the standard protocol (Y in S840), the electronic device 100 matches a service suitable for the standard protocol (S850) and extracts the service (S860). However, if the protocol is a non-standard protocol (N in S840), the electronic device 100 extracts a service corresponding to the external device 200 (S860).

In addition, the electronic device 100 may determine whether or not a plurality of services corresponding to the external device 200 indicated by the electronic device 100 are present.

In the case in which one service corresponding to the external device indicated by the electronic device 100 is present, the electronic device 100 provides the corresponding service. However, in a case in which the plurality of services corresponding to the external device 200 indicated by the electronic device 100 are present, the electronic device 100 may provide a III for selecting the service. In addition, if a user input for selecting the service is sensed, the electronic device 100 may provide the selected service.

Specifically, the electronic device 100 provides various services depending on a kind of trigger input and a kind of external device 200. According to an exemplary embodiment, the electronic device 100 may provide a service providing a UI screen of an application for controlling the external device 200 indicated by the electronic device 100. For example, after the trigger input is sensed, if the electronic device 100 indicates the air conditioner, the electronic device 100 may provide a service providing a UI screen of an application for controlling the air conditioner. In this case, the application for controlling the air conditioner may be a web application which is downloaded from the external server 50 to be executed without requiring a separate installation process. However, the case in which the application is the web application is merely an example, and the application may be an application installed in the electronic device 100. In this case, the application installed in the electronic device 100 may be installed by being downloaded from the external server 50, but this is merely an example, and the application may be installed by being directly transmitted from the external device 200.

According to another exemplary embodiment, if the trigger input selecting the UI element for a specific function is input, the electronic device 100 may provide a service transmitting a control command for executing the specific function to the external device 200 indicated by the electronic device 100. For example, after a trigger input selecting a III element for sharing music contents is input, if the electronic device 100 indicates an external audio device, the electronic device 100 may transmit the music contents and an execution command to the external audio device in order to share the music contents.

In addition, after the trigger input is sensed, the electronic device indicates the plurality of external devices 200-1, 200-2, and 200-3, and the electronic device 100 may provide a service controlling the plurality of external devices 200-1, 200-2, and 200-3. For example, after a UI element for turning-on power is selected, if the electronic device 100 indicates a plurality of lights, the electronic device 100 may simultaneously or sequentially transmit a power on command to the plurality of lights.

In addition, after the electronic device 100 indicates the external device, the electronic device 10 may control the external device 200 through a motion input. For example, after the trigger input is sensed, if the electronic device 100 indicates the light, the electronic device 100 performs a communication connection with the light and then executes an application for controlling the light. In addition, if a motion in which the electronic device 100 is upwardly directed is sensed according to a guide phrase shown in the execution screen of the application, the electronic device 100 may transmit a power on command to the light.

In a case in which a first electronic device 100-1 is connected to the external device 200, since the external device 200 stops the broadcasting of the radio signal, there is a problem that another electronic device 100-2 may not know whether or not the external device 200 exists. Therefore, there was a problem in that it is difficult for another electronic device 100-2 which is not paired in advance to connect.

Below, a flow of an example in which the electronic device 100-1 broadcasts that another electronic device 100-2 occupies the external device 200 will be described with reference to FIG. 9.

First, the external device 200 broadcasts the radio signal (S910). That is, the external device 200 may broadcast the radio signal including the advertising packet in order to inform a presence of the external device 200 in a state in which the communication connection with the electronic device 100 is not performed. In addition, the first electronic device 100-1 transmits a beacon signal to the external device 200 in response to the radio signal (S920). In addition, the external device 200 and the first electronic device 100-1 perform the communication connection (S930).

If the communication connection between the external device 200 and the first electronic device 100-1 is performed, the external device 200 stops the broadcasting of the radio signal (S940). As such, since the external device 200 stops the broadcasting for own information after the communication connection with any electronic device is performed, other electronic devices other than the first electronic device 100-1 may not know whether or not the external device 200 is present through the radio signal.

However, according to an exemplary embodiment, the first electronic device 100-1 broadcasts a signal including an information packet of the external device 200 instead of the external device 200 (S950). In the case in which the second electronic device 100-2 receives the signal including the information packet of the external device 200, the second electronic device 100-2 transmits the beacon signal to the first electronic device 100-1 in response to the signal (S960). Thereby, the first electronic device 100-1 may inform the second electronic device 100-2 instead of the external device 200 of information on the fact that the external device 200 is present and connection possibility, and the second electronic device 100-2 waits or performs the communication connection with the external device 200 according to the user command (S970).

As illustrated in FIG. 9, after the communication connection between the external device 200 and the first electronic device 100-1 is performed, the first electronic device 100-1 broadcasts the information packet of the external device 200 instead of the external device 200, such that the external device 200 and the first electronic device 100-1 may be more conveniently used when a plurality of users use one external device 200.

Below, one or more exemplary embodiments will be described with reference to FIGS. 10A to 20B.

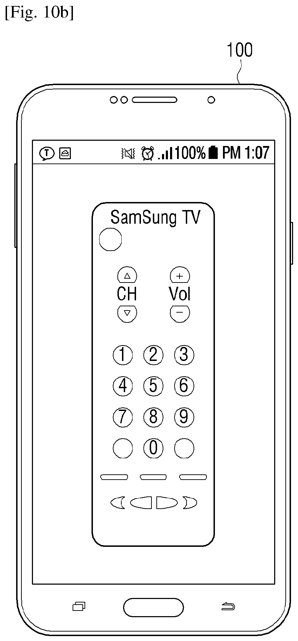

According to an exemplary embodiment, the electronic device 100 may provide a service executing an application for controlling the external device 200 indicated by the electronic device 100. Specifically, after the trigger input (e.g., a long press input for a preset button or a preset UI element) is sensed, in a case in which the electronic device 100 indicates the TV 200-1 as illustrated in FIG. 10A, the electronic device 100 may execute an application for controlling the TV 200-1 to thereby provide a UI screen of the application for controlling the TV 200-1 as illustrated in FIG. 10B. In particular, before the trigger input is sensed, the electronic device 100 may maintain a lock state. In this case, the lock state refers to a state before a user authentication (e.g., a password, biometrics) for using the electronic device 100 is performed, and the electronic device 100 may provide a black screen or a lock screen during the lock state. In addition, after the trigger input is sensed in the lock state, the electronic device indicates the TV, the electronic device 100 may provide an execution screen of an application for controlling the TV to the display 140. Here, the application for controlling the TV may be a web application.

Although an exemplary embodiment described above describes a case in which the electronic device 100 controls the TV 200-1, this is merely an example, and the electronic device 100 may provide a service executing an application for controlling various external devices such as a fan, a light, a refrigerator, a mini-car, a coffee machine, a vehicle, and the like.

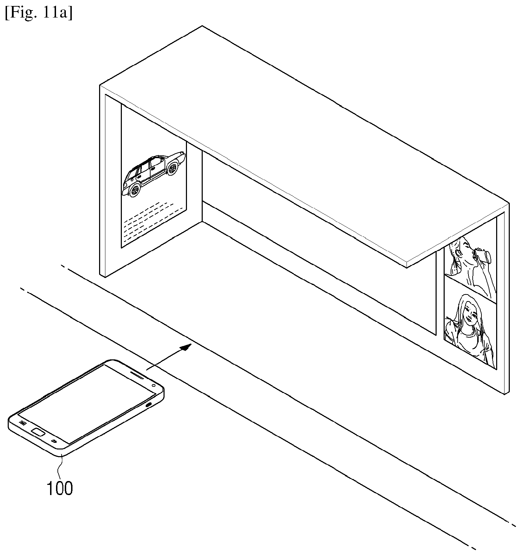

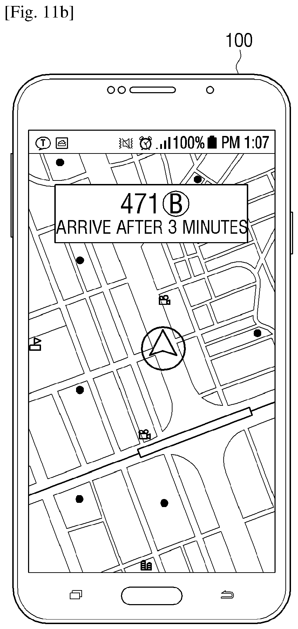

According to another exemplary embodiment, the electronic device 100 may provide a service obtaining information related to the external device 200 indicated by the electronic device 100 to the user. For example, after the trigger input is sensed, as illustrated in FIG. 11, in a case in which the electronic device 100 indicates a station (e.g., an external device attached to a bus station), the electronic device 100 may be guided with information (e.g., bus arrival information) on public transportation, as illustrated in FIG. 11B. That is, in a case in which the electronic device 100 indicates the station, the electronic device 100 may execute a bus guide application, which is an application corresponding to the station, and may provide a UI screen providing information on the public transportation.

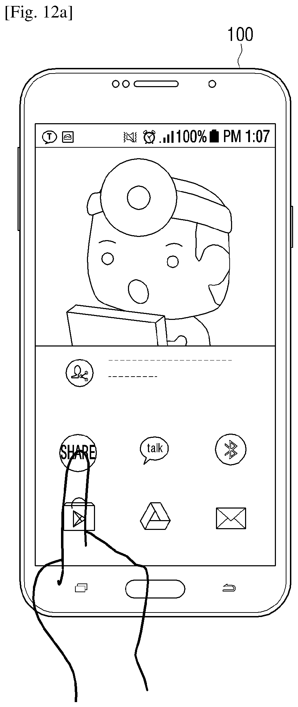

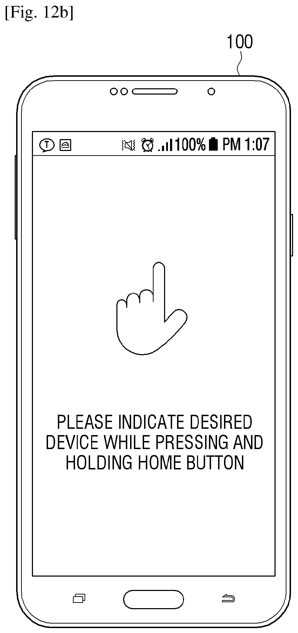

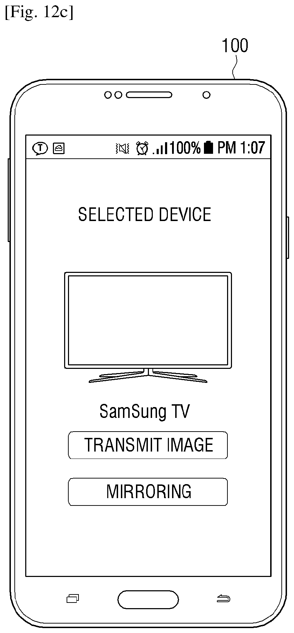

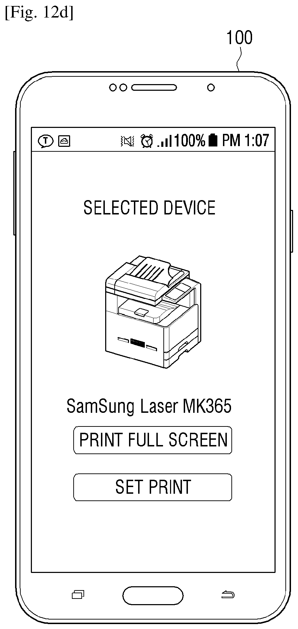

According to another exemplary embodiment, the electronic device 100 may provide a service for sharing specific contents with another external device. For example, as illustrated in FIG. 12A, in a case in which a specific UI element (e.g., a content sharing button) is selected, the electronic device 100 may display a guide phrase of "please indicate desired device while pressing and holding home button," as illustrated in FIG. 12B. In addition, in a case in which the external device is indicated while pressing and holding the home button, the electronic device 100 may provide various sharing services depending on a kind of the external device 200. For example, in a case in which the electronic device 100 indicates the TV, the electronic device 100 may execute the application for controlling the TV, and may provide an image transmission service or a mirroring service, as illustrated in FIG. 12C. As another example, in a case in which the electronic device 100 indicates a printer, the electronic device 100 may execute an application for controlling the printer, and may provide a print service or a print setting service, as illustrated in FIG. 12D.

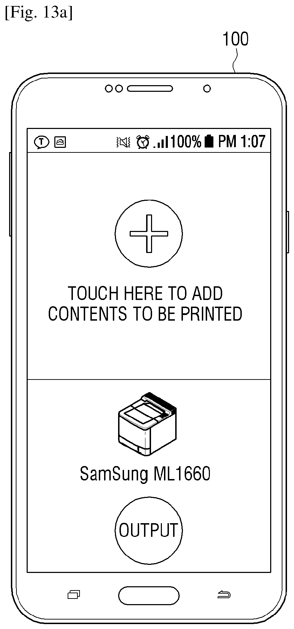

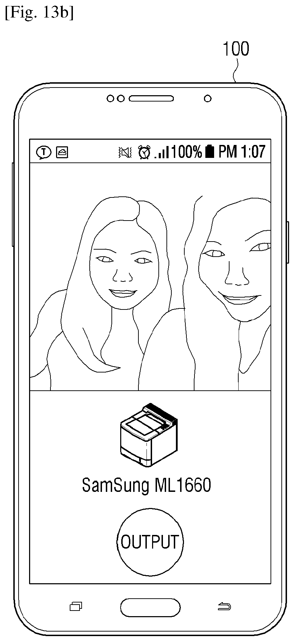

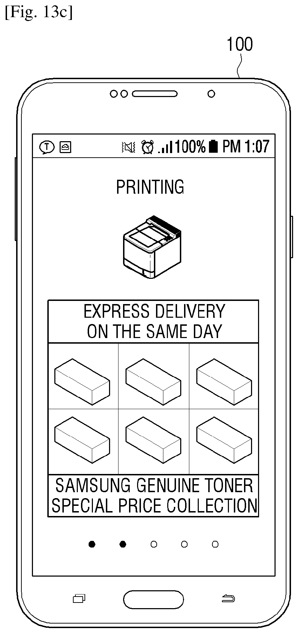

As another example, after the trigger input is sensed, if the electronic device 100 indicates the printer, the electronic device 100 may execute an application for controlling the printer. In addition, the electronic device 100 may provide an execution screen of the application as illustrated in FIG. 13A. As illustrated in FIG. 13B, in a case in which image contents intended to be printed are selected through the execution screen of the application, the electronic device 100 may transmit information on the selected image contents and a print command to the printer indicated by the electronic device 100. In this case, the electronic device 100 may provide a UI indicating that the print is being performed, as illustrated in FIG. 13C. In addition, the electronic device 100 may provide a service executing (e.g., connecting special price sale and provision site for the associated products, as illustrated in FIG. 13C) an application for purchasing products associated with the external device 200 indicated by the electronic device 100.

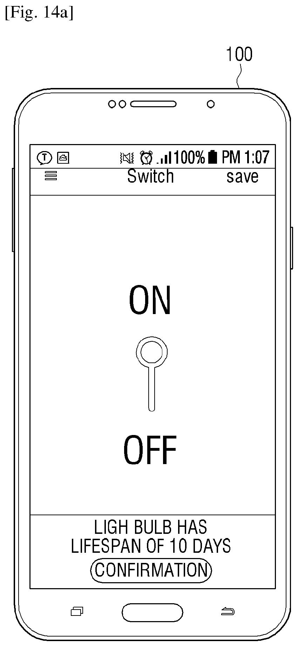

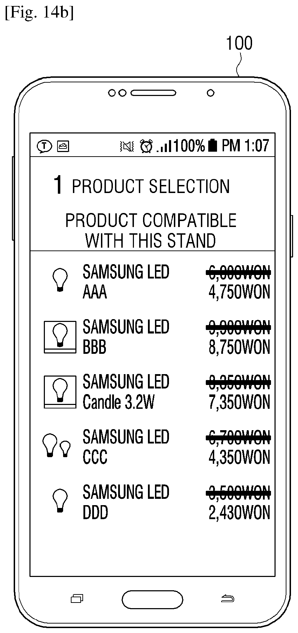

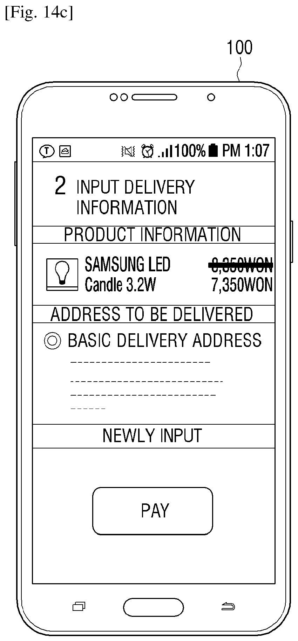

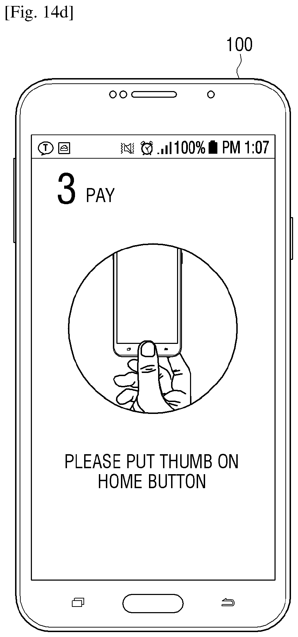

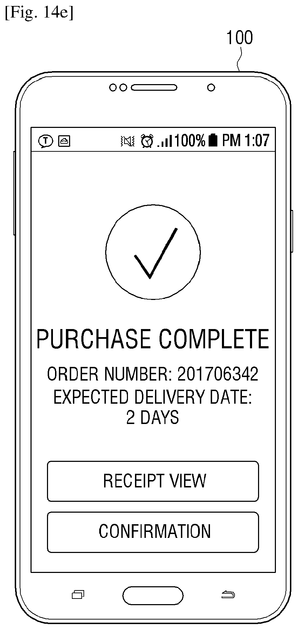

In addition, after the trigger input is sensed, if the electronic device 100 indicates the light, the electronic device 100 may execute an application associated with the light, and may display an execution screen of the application as illustrated in FIG. 14A. The electronic device 100 may display a screen for purchasing supplies associated with the light, as illustrated in FIG. 14B according to the user command, and in a case in which the supplies intended to be purchased are selected, the electronic device 100 may display a screen for inputting delivery information as illustrated in FIG. 14C. The electronic device 100 may display a guide screen for a finger scan as illustrated in FIG. 14D for a user authentication for purchasing the supplies, and in a case in which the user authentication is completed, the electronic device 100 may display a guide screen guiding the purchasing completion as illustrated in FIG. 14E.

As another example, in a case in which the external device such as the smart phone is present in the direction indicated by the electronic device 100, the electronic device 100 may transmit a variety of information such as private information, remittance information, credit information, and the like to the external device. For example, in a case in which the electronic device 100 is the smart phone, when a payment service is intended to be performed using another smart phone, the electronic device 100 may transmit information for payment to another smart phone by indicating another smart phone by the electronic device 100 after the trigger input is sensed.

As another example, if the electronic device 100 indicates a device (e.g., a POS machine, or the like) for purchasing the product, and the trigger input is sensed, the electronic device 100 may execute a credit card application and provide a price payment service after the user authentication.

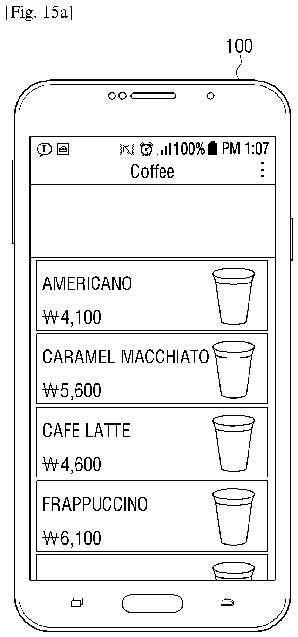

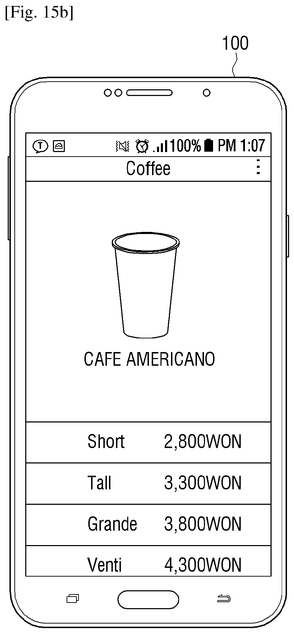

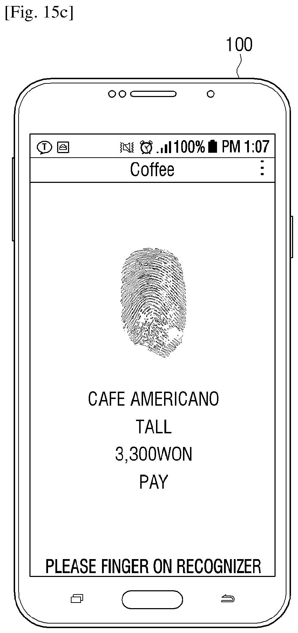

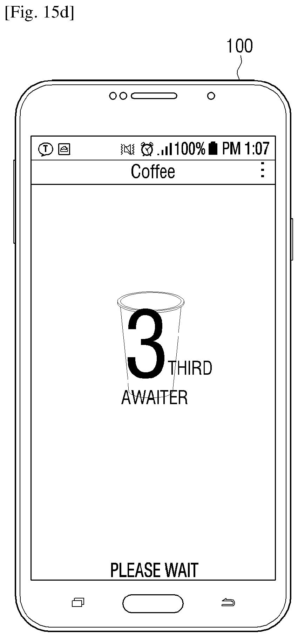

As another example, in a case in which the electronic device 100 indicates a specific device (e.g., a guide menu) in a cafe, the electronic device 100 may display a coffee menu screen sold in the cafe as illustrated in FIG. 15A. In addition, in a case in which a specific menu is selected on the coffee menu screen, the electronic device 100 may display a screen guiding an order detail as illustrated in FIG. 15B, and may display a screen for the user authentication as illustrated in FIG. 15C. After the user authentication is completed, the electronic device 100 may transmit a signal for a coffee order to a server of the cafe, and receive order information from the server of the cafe to thereby display order wait information as illustrated in FIG. 15D. In addition, in a case in which information indicating that the coffee is brought is received from the server, the electronic device 100 may generate vibration to guide the user that the coffee is brought. Thereby, the user may know that the ordered coffee is brought even though the user does not receive a separate vibration bell from a clerk at the time of ordering the coffee.

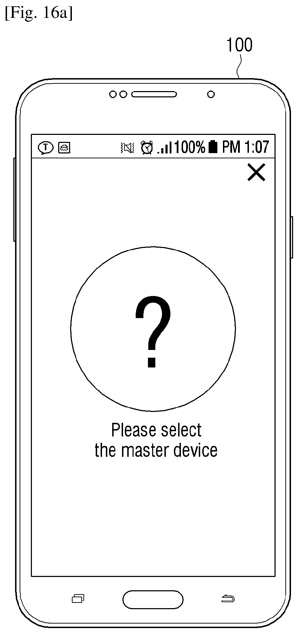

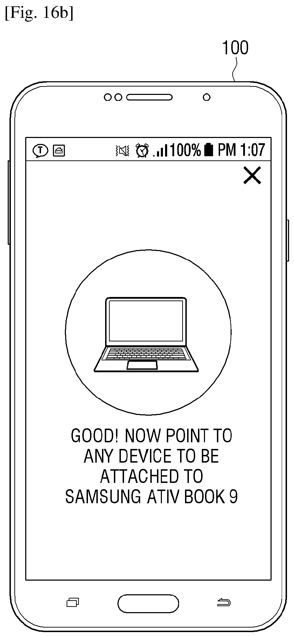

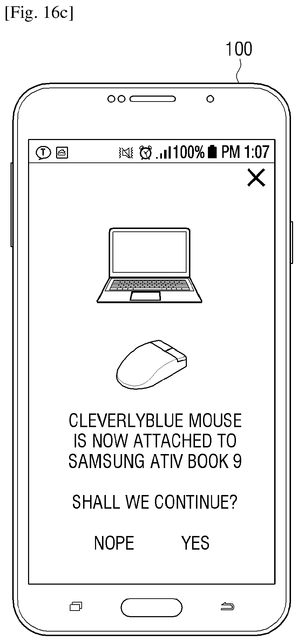

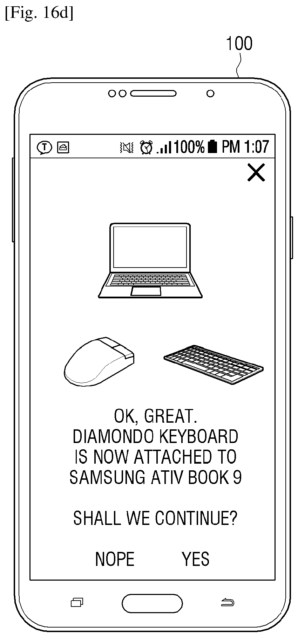

According to another exemplary embodiment, the electronic device 100 may provide a service connecting a plurality of external devices and controlling the plurality of external devices at the same time. Specifically, after an application for connecting a notebook, a wireless keyboard, and a wireless mouse by the electronic device 100 is executed, in a case in which the trigger input is sensed, the electronic device 100 may display a guide screen as illustrated in FIG. 16A. In addition, if the electronic device 100 indicates the notebook, which is a master device, the electronic device 100 may set the notebook as the master device, and may display the guide screen as illustrated in FIG. 16B. In addition, if the electronic device 100 indicates the wireless mouse, the electronic device 100 may transmit a control signal for instructing a communication connection to the notebook and the wireless mouse, and may display a guide screen as illustrated in FIG. 16C. In this case, the notebook and the wireless mouse may perform the communication connection in response to the control signal for instructing the communication connection. In addition, after a command for connecting an additional device is input, if the electronic device 100 indicates the wireless keyboard, the electronic device 100 may transmit a control signal for instructing a communication connection to the notebook and the wireless keyboard, and may display a guide screen as illustrated in FIG. 16D. In addition, if a user input for completing the communication connection is sensed, the electronic device 100 may terminate a connection service between the note book and another additional device.

In addition, the electronic device 100 may sequentially indicate the plurality of external devices, and may simultaneously or sequentially transmit the control command to the plurality of external devices. For example, after the trigger input is sensed, if the electronic device sequentially indicates the plurality of external devices like dragging the plurality of external devices, the electronic device 100 may transmit the same control command (e.g., a control command increasing a volume) to the plurality of external devices (e.g., a plurality of audio devices).

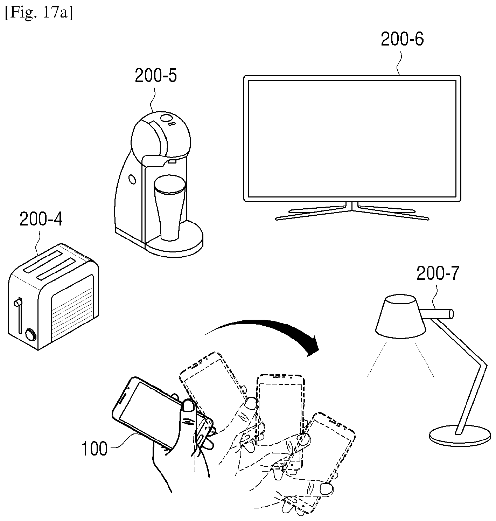

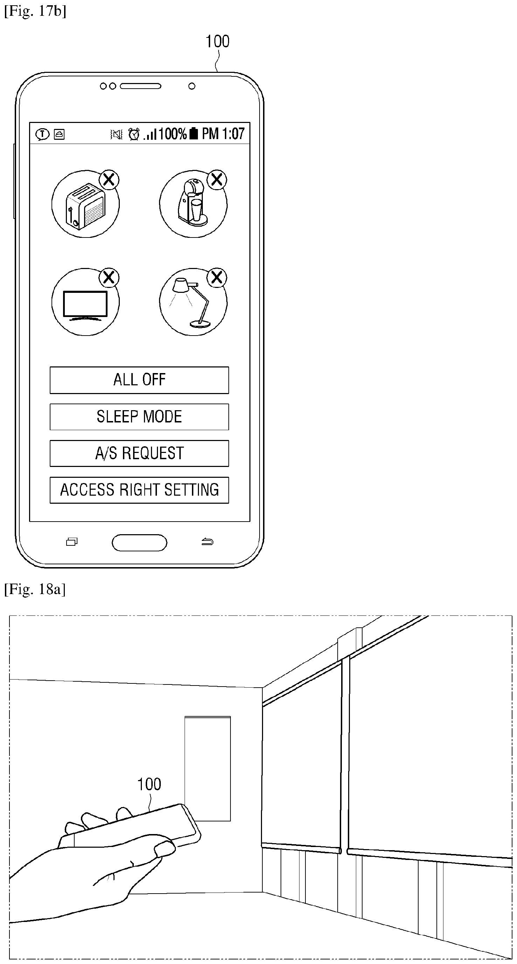

According to another exemplary embodiment, after the trigger input is sensed, in a case in which the plurality of external devices indicated by the electronic device 100 are present, the electronic device 100 may provide a III for selecting one of services corresponding to the plurality of external devices. For example, after the trigger input is sensed, as illustrated in FIG. 17A, in a case in which the electronic device 100 indicates a toaster 200-4, a coffee maker 200-5, a TV 200-6, and a stand 200-7, the electronic device 100 may provide a UI including the services corresponding to the plurality of external devices 200-4 to 200-7, as illustrated in FIG. 17B. In addition, if one of the plurality of services is selected, the electronic device 100 may transmit a control command corresponding to the selected service to the plurality of external devices 200-4 to 200-7. In this case, the plurality of external devices 200-4 to 200-7 may be deselected through the UI.

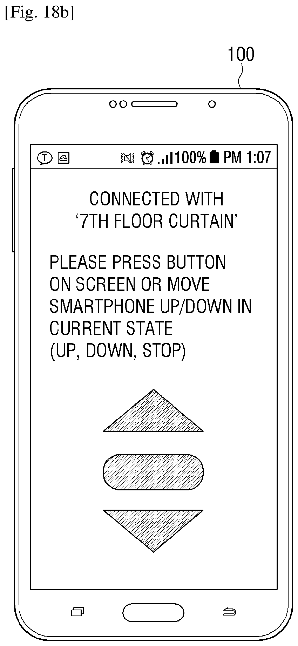

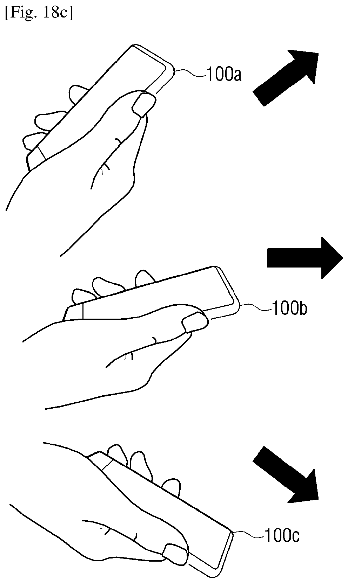

According to another exemplary embodiment, the electronic device 100 may control the external device 200 indicated by the electronic device 100 through a user motion. Specifically, after the trigger input is input, if the electronic device 100 indicates a smart curtain as illustrated in FIG. 18A, the electronic device 100 may perform a communication connection with the smart curtain, and may provide a UI as illustrated in FIG. 18B. In addition, as illustrated in 100a of FIG. 18C, if a motion that the electronic device 100 indicates an upward direction is sensed, the electronic device 100 may transmit a control command setting up the curtain to the smart curtain, as illustrated in 100b of FIG. 18C, if a motion that the electronic device 100 indicates a front direction is sensed, the electronic device 100 may transmit a control command stopping an operation of the curtain to the smart curtain, and as illustrated in 100c of FIG. 18C, if a motion that the electronic device 100 indicates a downward direction is sensed, the electronic device 100 may transmit a control command taking down the curtain to the smart curtain.

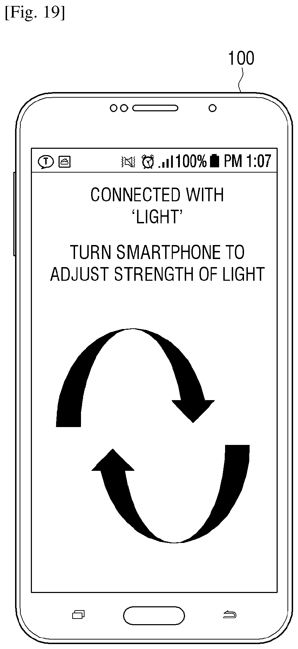

As another example, after the trigger input is sensed, if the electronic device 100 indicates the light, the electronic device 100 may perform a communication connection with the light, and may display a UI guiding a user motion as illustrated in FIG. 19.

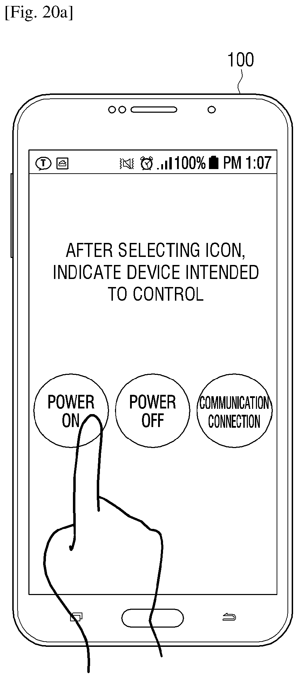

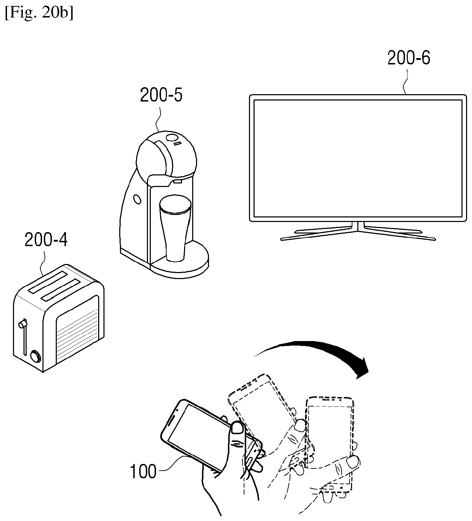

According to another exemplary embodiment, after the electronic device 100 selects a III element corresponding to a specific function, if the electronic device 100 indicates the plurality of external devices 200-4 to 200-6, the electronic device 100 may transmit a control command corresponding to the selected UI element to the plurality of external devices 200-4 to 200-6. For example, as illustrated in FIG. 20A, after the electronic device 100 selects a UI element corresponding to a power on, if the electronic device 100 indicates the toaster 200-4, the coffee maker 200-5, and the TV 200-6, as illustrated in FIG. 20B, the electronic device 100 may transmit the control command for turning-on power to the toaster 200-4, the coffee maker 200-5, and the TV 200-6.

As described above, according to the exemplary embodiments, even though the electronic device does not accurately know a name or a service content of the external device intended to be controlled by the user, the electronic device recognizes the external device by only an operation of the user indicating the external device, thereby making it possible to more conveniently provide various services.

Meanwhile, the method for providing a service of an electronic device according to the diverse exemplary embodiments described above may be implemented in a program and be provided to a user terminal. For example, a non-transitory computer readable medium having a program including a method for controlling a user terminal stored thereon may be provided.

The non-transitory computer readable medium refers to a machine readable medium that semi-permanently stores the data. Specifically, various applications or programs described above may be provided to be stored in the non-transitory computer readable medium such as a compact disc (CD), a digital versatile disk (DVD), a hard disk, a Blu-ray disk, a universal serial bus (USB), a memory card, a read-only memory (ROM), or the like.

## Claims

1. A method for controlling an external device (200) by an electronic device (100), the method comprising:
when a trigger input is sensed (S510), determining an external device (200) frontally indicated by the electronic device among a plurality of external devices (S530);
providing a user interface , UI, screen on a display (104) of the electronic device (100) of an application corresponding to the external device frontally indicated by the electronic device (S540); and
when a user command is input through the UI screen of the application (S550) on the display (104) of the electronic device (100), transmitting a control signal corresponding to the user command to the external device frontally indicated by the electronic device (S560),
wherein in the determining of the external device (200) frontally indicated by the electronic device (100),
when at least two external devices are present in a direction frontally indicated by the electronic device, a UI screen for selecting one of the at least two external devices is provided, and
when one external device is selected through the UI screen for selecting the external device, the selected external device is judged as one external device frontally indicated by the electronic device.

2. The method as claimed in claim 1, wherein the determining of the external device (200) indicated by the electronic device (100) includes:
receiving signals broadcasted by the external device using (200) a plurality of antennas;
determining the external device (100) indicated by the electronic device based on a phase difference and signal strength of the signals received using the plurality of antennas; and
performing a communication connection with the external device indicated by the electronic device (100).

3. The method as claimed in claim 2, further comprising: when it is judged that the electronic device indicates the external device, storing information on the external device and environment information sensed while the electronic device (100) indicates the external device, or transmitting the information to an external server (50).

4. The method as claimed in claim 2, wherein in the determining of the external device indicated by the electronic device, when at least two external devices (200) are present in a direction indicated by the electronic device (100), one external device indicated by the electronic device among the at least two external devices is judged using additional environment information together with the phase difference and the signal strength of the signals received using the plurality of antennas.

5. The method as claimed in claim 1, wherein the determining of the external device (200) indicated by the electronic device (100) includes:
receiving a signal broadcasted from at least one external device;
performing a communication connection with the at least one external device based on the received signal;
requesting a signal for a location estimation to the at least one external device;
receiving the signal for the location estimation using a plurality of antennas; and
determining the external device indicated by the electronic device based on a phase difference and signal strength of the signals for the location estimation received using the plurality of antennas.

6. The method as claimed in claim 1, wherein the providing of the UI screen of the application corresponding to the external device (200) indicated by the electronic device (100) includes:
determining an application corresponding to the external device indicated by the electronic device (100);
determining whether data for a UI screen of the judged application is prestored; and
providing the UI screen of the judged application using the prestored data.

7. The method as claimed in claim 1, wherein the providing of the UI screen of the application corresponding to the external device (200) indicated by the electronic device (100) includes:
requesting data for the UI screen of the application corresponding to the external device (200) indicated by the electronic device from an external server (50);
receiving the data for the UI screen of the application from the external server (50); and
providing the UI screen of the application using the received data for the UI screen of the application.

8. The method as claimed in claim 1, wherein the UI screen of the application includes at least one UI element for controlling the external device (200) indicated by the electronic device (100).

9. The method as claimed in claim 1, further comprising: broadcasting whether the external device (200) is present and connection related information to the external device (200) while a communication connection between the electronic device (100) and the external device (200) indicated by the electronic device (100) is performed.

10. An electronic device (100) comprising:
a communicator (110) configured to perform communication with an external device (200);
an input unit (120) configured to sense a user input;
a display (140) configured to provide an image;
a processor (130) configured to determine an external device (200) frontally indicated by the electronic device (100) among a plurality of external devices when a trigger input is sensed through the input unit (120),
**characterized in that** the processor (130) is configured to control the display (140) of the electronic device (100) to provide a user interface, UI, screen of an application corresponding to the external device (200) frontally indicated by the electronic device (100), and to control the communicator (110) to transmit a control signal corresponding to a user command to the external device frontally indicated by the electronic device (100) when the user command is input through the UI screen of the application, wherein the processor (130) is configured to, in response to at least two external devices being present in a direction frontally indicated by the electronic device (100), control the display (140) to provide a UI screen for selecting one of the at least two external devices, and in response to one external device being selected through the UI screen for selecting the external device, determine the selected external device as the one external device frontally indicated by the electronic device.

11. The electronic device (100) as claimed in claim 10, wherein the communicator (110) includes a plurality of antennas receiving signals broadcasted by the external device (100), and
the processor judges the external device indicated by the electronic device based on a phase difference and signal strength of the signals received using the plurality of antennas, and performs a communication connection with the external device indicated by the electronic device.

12. The electronic device (100) as claimed in claim 11, wherein when it is judged that the electronic device (100) indicates the external device, the processor (130) controls the communicator (110) to store information on the external device (200) and environment information sensed while the electronic device (100) indicates the external device (200), or transmit the information to an external server (200).

13. The electronic device (100) as claimed in claim 11, wherein when at least two external devices are present in a direction indicated by the electronic device, the processor (130) judges one external device indicated by the electronic device (100) among the at least two external devices using additional environment information together with the phase difference and the signal strength of the signals received using the plurality of antennas.

14. The electronic device (100) as claimed in claim 10, wherein the communicator (110) includes a plurality of antennas receiving signals broadcasted by the external device, receives a signal broadcasted from at least one external device, performs a communication connection with the at least one external device, requests a signal for a location estimation to the at least one external device, and receives the signal for the location estimation using the plurality of antennas; and
the processor (130) judges the external device indicated by the electronic device based on a phase difference and signal strength of the signals for the location estimation received using the plurality of antennas.

## Patentansprüche

1. Verfahren zur Steuerung einer externen Vorrichtung (200) durch eine elektronische Vorrichtung (100), wobei das Verfahren umfasst:
wenn ein Triggereingang erfasst wird (S510), Bestimmen einer externen Vorrichtung (200), die von der elektronischen Vorrichtung frontal angezeigt wird, unter einer Vielzahl von externen Vorrichtungen (S530);
Bereitstellen eines Benutzerschnittstellen-, UI,-Bildschirms auf einer Anzeige (104) der elektronischen Vorrichtung (100) einer Anwendung, die der von der elektronischen Vorrichtung frontal angezeigten externen Vorrichtung entspricht (S540); und
wenn ein Benutzerbefehl über den Ul-Bildschirm der Anwendung (S550) auf der Anzeige (104) der elektronischen Vorrichtung (100) eingegeben wird, Übertragen eines Steuersignals, das dem Benutzerbefehl entspricht, an die externe Vorrichtung, die frontal durch die elektronische Vorrichtung angezeigt wird (S560),
wobei beim Bestimmen der externen Vorrichtung (200), die frontal durch die elektronische Vorrichtung (100) angezeigt wird,
wenn mindestens zwei externe Vorrichtungen in einer von der elektronischen Vorrichtung frontal angezeigten Richtung vorhanden sind, ein Ul-Bildschirm zum Auswählen einer der mindestens zwei externen Vorrichtungen bereitgestellt wird, und
wenn eine externe Vorrichtung über den Ul-Bildschirm zum Auswählen der externen Vorrichtung ausgewählt wird, die ausgewählte externe Vorrichtung als eine externe Vorrichtung beurteilt wird, die frontal durch die elektronische Vorrichtung angezeigt wird.

2. Verfahren nach Anspruch 1, wobei das Bestimmen der externen Vorrichtung (200), die von der elektronischen Vorrichtung (100) angezeigt wird, umfasst:
Empfangen von Signalen, die durch die externe Vorrichtung (200) gesendet werden, unter Verwendung einer Vielzahl von Antennen;
Bestimmen der externen Vorrichtung (100), die von der elektronischen Vorrichtung angezeigt wird, basierend auf einer Phasendifferenz und einer Signalstärke der Signale, die unter Verwendung der Vielzahl von Antennen empfangen werden; und
Herstellen einer Kommunikationsverbindung mit der externen Vorrichtung, die von der elektronischen Vorrichtung (100) angezeigt wird.

3. Verfahren nach Anspruch 2, ferner umfassend: wenn beurteilt wird, dass die elektronische Vorrichtung die externe Vorrichtung anzeigt, Speichern von Informationen über die externe Vorrichtung und von Umgebungsinformationen, die erfasst werden, während die elektronische Vorrichtung (100) die externe Vorrichtung anzeigt, oder Übertragen der Informationen an einen externen Server (50).

4. Verfahren nach Anspruch 2, wobei beim Bestimmen der von der elektronischen Vorrichtung angezeigten externen Vorrichtung, wenn mindestens zwei externe Vorrichtungen (200) in einer von der elektronischen Vorrichtung (100) angezeigten Richtung vorhanden sind, eine von der elektronischen Vorrichtung angezeigte externe Vorrichtung unter den mindestens zwei externen Vorrichtungen unter Verwendung zusätzlicher Umgebungsinformationen zusammen mit der Phasendifferenz und der Signalstärke der unter Verwendung der Vielzahl von Antennen empfangenen Signale beurteilt wird.

5. Verfahren nach Anspruch 1, wobei das Bestimmen der externen Vorrichtung (200), die von der elektronischen Vorrichtung (100) angezeigt wird, umfasst:
Empfangen eines von mindestens einer externen Vorrichtung gesendeten Signals;
Herstellen einer Kommunikationsverbindung mit der mindestens einen externen Vorrichtung auf der Grundlage des empfangenen Signals;
Anfordern eines Signals für eine Standortschätzung an die mindestens eine externe Vorrichtung;
Empfangen des Signals für die Standortschätzung unter Verwendung einer Vielzahl von Antennen; und
Bestimmen der externen Vorrichtung, die von der elektronischen Vorrichtung angezeigt wird, auf der Grundlage einer Phasendifferenz und einer Signalstärke der Signale für die Standortschätzung, die unter Verwendung der Vielzahl von Antennen empfangen werden.

6. Verfahren nach Anspruch 1, wobei das Bereitstellen des Ul-Bildschirms der Anwendung, die der von der elektronischen Vorrichtung (100) angezeigten externen Vorrichtung (200) entspricht, umfasst: Bestimmen einer Anwendung, die der von der elektronischen Vorrichtung (100) angezeigten externen Vorrichtung entspricht;
Bestimmen, ob Daten für einen UI-Bildschirm der beurteilten Anwendung vorgespeichert sind;
und
Bereitstellen des Ul-Bildschirms der beurteilten Anwendung unter Verwendung der vorgespeicherten Daten.

7. Verfahren nach Anspruch 1, wobei das Bereitstellen des Ul-Bildschirms der Anwendung, die der von der elektronischen Vorrichtung (100) angezeigten externen Vorrichtung (200) entspricht, umfasst:
Anfordern von Daten für den Ul-Bildschirm der Anwendung, die der von der elektronischen Vorrichtung angezeigten externen Vorrichtung (200) entspricht, von einem externen Server (50);
Empfangen der Daten für den Ul-Bildschirm der Anwendung von dem externen Server (50); und
Bereitstellen des Ul-Bildschirms der Anwendung unter Verwendung der empfangenen Daten für den Ul-Bildschirm der Anwendung.

8. Verfahren nach Anspruch 1, wobei der Ul-Bildschirm der Anwendung mindestens ein UI-Element zum Steuern der von der elektronischen Vorrichtung (100) angezeigten externen Vorrichtung (200) enthält.

9. Verfahren nach Anspruch 1, ferner umfassend: Senden, ob die externe Vorrichtung (200) vorhanden ist, und von verbindungsbezogenen Informationen an die externe Vorrichtung (200), während eine Kommunikationsverbindung zwischen der elektronischen Vorrichtung (100) und der externen Vorrichtung (200), die von der elektronischen Vorrichtung (100) angezeigt wird, durchgeführt wird.

10. Elektronische Vorrichtung (100), die Folgendes umfasst:
einen Kommunikator (110), der so konfiguriert ist, dass er eine Kommunikation mit einer externen Vorrichtung (200) durchführt;
eine Eingabeeinheit (120), die zum Erfassen einer Benutzereingabe konfiguriert ist;
eine Anzeige (140), die zum Bereitstellen eines Bildes konfiguriert ist;
einen Prozessor (130), der so konfiguriert ist, dass er eine externe Vorrichtung (200), die von der elektronischen Vorrichtung (100) frontal angezeigt wird, aus einer Vielzahl von externen Vorrichtungen bestimmt, wenn ein Triggereingang über die Eingabeeinheit (120) erfasst wird,
**dadurch gekennzeichnet, dass** der Prozessor (130) so konfiguriert ist, dass er die Anzeige (140) der elektronischen Vorrichtung (100) so steuert, dass sie einen Benutzerschnittstellen-, UI,-Bildschirm einer Anwendung bereitstellt, die der externen Vorrichtung (200) entspricht, die frontal von der elektronischen Vorrichtung (100) angezeigt wird, und dass er den Kommunikator (110) so steuert, dass er ein Steuersignal, das einem Benutzerbefehl entspricht, an die externe Vorrichtung überträgt, die frontal von der elektronischen Vorrichtung (100) angezeigt wird, wenn der Benutzerbefehl über den Ul-Bildschirm der Anwendung eingegeben wird, wobei der Prozessor (130) so konfiguriert ist, dass er als Reaktion auf das Vorhandensein von mindestens zwei externen Vorrichtungen in einer frontal von der elektronischen Vorrichtung (100) angezeigten Richtung die Anzeige (140) so steuert, dass sie einen Ul-Bildschirm zum Auswählen einer der mindestens zwei externen Vorrichtungen bereitstellt, und dass er als Reaktion auf die Auswahl einer externen Vorrichtung über den Ul-Bildschirm zum Auswählen der externen Vorrichtung die ausgewählte externe Vorrichtung als die eine externe Vorrichtung bestimmt, die frontal von der elektronischen Vorrichtung angezeigt wird.

11. Elektronische Vorrichtung (100) nach Anspruch 10, wobei der Kommunikator (110) eine Vielzahl von Antennen enthält, die von der externen Vorrichtung (100) gesendete Signale empfangen, und
der Prozessor die durch die elektronische Vorrichtung angezeigte externe Vorrichtung auf der Grundlage einer Phasendifferenz und einer Signalstärke der unter Verwendung der Vielzahl von Antennen empfangenen Signale beurteilt und eine Kommunikationsverbindung mit der durch die elektronische Vorrichtung angezeigten externen Vorrichtung herstellt.

12. Elektronische Vorrichtung (100) nach Anspruch 11, wobei, wenn beurteilt wird, dass die elektronische Vorrichtung (100) die externe Vorrichtung anzeigt, der Prozessor (130) den Kommunikator (110) steuert, um Informationen über die externe Vorrichtung (200) und Umgebungsinformationen zu speichern, die erfasst werden, während die elektronische Vorrichtung (100) die externe Vorrichtung (200) anzeigt, oder die Informationen an einen externen Server (200) zu übertragen.

13. Elektronische Vorrichtung (100) nach Anspruch 11, wobei, wenn mindestens zwei externe Vorrichtungen in einer von der elektronischen Vorrichtung angezeigten Richtung vorhanden sind, der Prozessor (130) eine von der elektronischen Vorrichtung (100) angezeigte externes Vorrichtung unter den mindestens zwei externen Vorrichtungen unter Verwendung zusätzlicher Umgebungsinformationen zusammen mit der Phasendifferenz und der Signalstärke der unter Verwendung der mehreren Antennen empfangenen Signale beurteilt.

14. Elektronische Vorrichtung (100) nach Anspruch 10, wobei der Kommunikator (110) eine Vielzahl von Antennen enthält, die von der externen Vorrichtung gesendete Signale empfangen, ein von mindestens einer externen Vorrichtung gesendetes Signal empfängt, eine Kommunikationsverbindung mit der mindestens einen externen Vorrichtung herstellt, ein Signal für eine Standortschätzung an die mindestens eine externe Vorrichtung anfordert und das Signal für die Standortschätzung unter Verwendung der Vielzahl von Antennen empfängt; und
der Prozessor (130) die von der elektronischen Vorrichtung angezeigte externe Vorrichtung auf der Grundlage einer Phasendifferenz und einer Signalstärke der unter Verwendung der Vielzahl der Antennen empfangenen Signale für die Standortschätzung beurteilt.

## Revendications

1. Procédé de commande d'un dispositif externe (200) par un dispositif électronique (100), le procédé comprenant :
lorsqu'une entrée de déclenchement est détectée (S510), déterminer un dispositif externe (200) indiqué frontalement par le dispositif électronique parmi une pluralité de dispositifs externes (S530) ;
fournir un écran d'interface utilisateur, Ul, sur un affichage (104) du dispositif électronique (100) d'une application correspondant au dispositif externe indiqué frontalement par le dispositif électronique (S540) ; et
lorsqu'une commande utilisateur est entrée via l'écran UI de l'application (S550) sur l'affichage (104) du dispositif électronique (100), transmettre un signal de commande correspondant à la commande utilisateur au dispositif externe indiqué frontalement par le dispositif électronique (S560),
dans lequel, lors de la détermination du dispositif externe (200) qui est indiqué frontalement par le dispositif électronique (100),
lorsqu'au moins deux dispositifs externes sont présents dans une direction indiquée frontalement par le dispositif électronique, un écran UI permettant de sélectionner l'un des au moins deux dispositifs externes est fourni, et
lorsqu'un dispositif externe est sélectionné par le biais de l'écran UI permettant de sélectionner le dispositif externe, le dispositif externe sélectionné est considéré comme un dispositif externe indiqué frontalement par le dispositif électronique.

2. Procédé selon la revendication 1, dans laquelle la détermination du dispositif externe (200) indiqué par le dispositif électronique (100) comprend :
recevoir des signaux émis par le dispositif externe à l'aide (200) d'une pluralité d'antennes ;
déterminer le dispositif externe (100) indiqué par le dispositif électronique sur la base d'une différence de phase et de l'intensité de signal des signaux reçus à l'aide de la pluralité d'antennes ; et
établir une connexion de communication avec le dispositif externe indiqué par le dispositif électronique (100).

3. Procédé selon la revendication 2, comprenant en outre : lorsqu'il est jugé que le dispositif électronique indique le dispositif externe, le stockage d'informations sur le dispositif externe et d'informations sur l'environnement détectées pendant que le dispositif électronique (100) indique le dispositif externe, ou la transmission des informations à un serveur externe (50).

4. Procédé selon la revendication 2, dans lequel, lors de la détermination du dispositif externe indiqué par le dispositif électronique, lorsqu'au moins deux dispositifs externes (200) sont présents dans une direction indiquée par le dispositif électronique (100), un dispositif externe indiqué par le dispositif électronique parmi les au moins deux dispositifs externes est jugé à l'aide d'informations environnementales supplémentaires ainsi que de la différence de phase et de l'intensité de signal des signaux reçus à l'aide de la pluralité d'antennes.

5. Procédé selon la revendication 1, dans laquelle la détermination du dispositif externe (200) indiqué par le dispositif électronique (100) comprend :
recevoir un signal émis par au moins un dispositif externe ;
établir une connexion de communication avec l'au moins un dispositif externe sur la base du signal reçu ;
demander un signal d'estimation de l'emplacement à l'au moins un dispositif externe ;
recevoir le signal pour l'estimation de l'emplacement à l'aide d'une pluralité d'antennes ; et
déterminer le dispositif externe indiqué par le dispositif électronique sur la base d'une différence de phase et de l'intensité de signal des signaux pour l'estimation de l'emplacement reçus à l'aide de la pluralité d'antennes.

6. Procédé selon la revendication 1, dans lequel la fourniture de l'écran UI de l'application correspondant au dispositif externe (200) indiqué par le dispositif électronique (100) comprend :
déterminer une application correspondant au dispositif externe indiqué par le dispositif électronique (100) ;
déterminer si des données d'un écran UI de l'application jugée sont préenregistrées ; et
fournir l'écran UI de l'application jugée en utilisant les données préenregistrées.

7. Procédé selon la revendication 1, dans lequel la fourniture de l'écran UI de l'application correspondant au dispositif externe (200) indiqué par le dispositif électronique (100) comprend :
demander à un serveur externe (50) des données pour l'écran UI de l'application correspondant au dispositif externe (200) indiqué par le dispositif électronique ;
recevoir, depuis le serveur externe (50), les données pour l'écran UI de l'application ; et
fournir l'écran UI de l'application en utilisant les données reçues pour l'écran UI de l'application.

8. Procédé selon la revendication 1, dans lequel l'écran UI de l'application comprend au moins un élément UI pour commander le dispositif externe (200) indiqué par le dispositif électronique (100).

9. Procédé selon la revendication 1, comprenant en outre : diffuser si le dispositif externe (200) est présent, et des informations relatives à la connexion au dispositif externe (200) pendant l'établissement d'une connexion de communication entre le dispositif électronique (100) et le dispositif externe (200) indiqué par le dispositif électronique (100).

10. Dispositif électronique (100) comprenant :
un communicateur (110) configuré pour communiquer avec un dispositif externe (200) ;
une unité d'entrée (120) configurée pour détecter une entrée d'utilisateur ;
un affichage (140) configuré pour fournir une image ;
un processeur (130) configuré pour déterminer un dispositif externe (200) indiqué frontalement par le dispositif électronique (100) parmi une pluralité de dispositifs externes lorsqu'une entrée de déclenchement est détectée par l'intermédiaire de l'unité d'entrée (120),
**caractérisé en ce que** le processeur (130) est configuré pour commander l'affichage (140) du dispositif électronique (100) afin de fournir un écran d'interface utilisateur, Ul, d'une application correspondant au dispositif externe (200) indiqué frontalement par le dispositif électronique (100), et pour commander le communicateur (110) afin de transmettre un signal de commande correspondant à une commande utilisateur au dispositif externe indiqué frontalement par le dispositif électronique (100) lorsque la commande utilisateur est entrée par l'intermédiaire de l'écran UI de l'application, dans lequel le processeur (130) est configuré pour, en réponse à la présence d'au moins deux dispositifs externes dans une direction indiquée frontalement par le dispositif électronique (100), commander l'affichage (140) pour fournir un écran UI permettant de sélectionner l'un des au moins deux dispositifs externes, et en réponse à la sélection d'un dispositif externe via l'écran UI pour sélectionner le dispositif externe, déterminer le dispositif externe sélectionné comme étant l'un dispositif externe indiqué frontalement par le dispositif électronique.

11. Dispositif électronique (100) selon la revendication 10, dans lequel le communicateur (110) comprend une pluralité d'antennes recevant des signaux diffusés par le dispositif externe (100), et
le processeur juge le dispositif externe indiqué par le dispositif électronique sur la base d'une différence de phase et de l'intensité de signal des signaux reçus à l'aide de la pluralité d'antennes, et établit une connexion de communication avec le dispositif externe indiqué par le dispositif électronique.

12. Dispositif électronique (100) selon la revendication 11, dans lequel, lorsqu'il est jugé que le dispositif électronique (100) indique le dispositif externe, le processeur (130) commande le communicateur (110) pour stocker des informations sur le dispositif externe (200) et des informations sur l'environnement détectées pendant que le dispositif électronique (100) indique le dispositif externe (200), ou pour transmettre les informations à un serveur externe (200).

13. Dispositif électronique (100) selon la revendication 11, dans lequel, lorsqu'au moins deux dispositifs externes sont présents dans une direction indiquée par le dispositif électronique, le processeur (130) juge un dispositif externe indiqué par le dispositif électronique (100) parmi les au moins deux dispositifs externes en utilisant des informations environnementales supplémentaires ainsi que la différence de phase et l'intensité de signal des signaux reçus à l'aide de la pluralité d'antennes.

14. Dispositif électronique (100) selon la revendication 10, dans lequel le communicateur (110) comprend une pluralité d'antennes recevant des signaux diffusés par le dispositif externe, reçoit un signal diffusé par au moins un dispositif externe, établit une connexion de communication avec l'au moins un dispositif externe, demande un signal pour une estimation de l'emplacement à l'au moins un dispositif externe, et reçoit le signal pour l'estimation de l'emplacement à l'aide de la pluralité d'antennes ; et
le processeur (130) juge le dispositif externe indiqué par le dispositif électronique sur la base d'une différence de phase et de l'intensité de signal des signaux pour l'estimation de l'emplacement reçus à l'aide de la pluralité d'antennes.
